# EUROPEAN PATENT SPECIFICATION

(11) **EP 4 644 841 B1**
(45) Date of publication and mention of the grant of the patent: **09.12.2026**
(21) Application number: 25172504.0
(22) Date of filing: 25.04.2025
(51) Int. Cl.: G01C 21/34, G01C 21/36

(54) **CONVERSATIONAL NAVIGATION ROUTING BASED ON USER PREFERENCES**
KONVERSATIONSNAVIGATIONSROUTING AUF BASIS VON BENUTZERPRÄFERENZEN
ROUTAGE DE NAVIGATION CONVERSATIONNELLE SUR LA BASE DE PRÉFÉRENCES D'UTILISATEUR

(30) Priority: 30.04.2024 US 202418651618
(43) Date of publication of application: 05.11.2025
(73) Proprietor: Microsoft Technology Licensing, LLC, Redmond, WA 98052-6399 (US)
(72) Inventor: YANKOV, Dragomir Dimitrov, Redmond, 98052-6399 (US); EVANS, Michael Robert, Redmond, 98052-6399 (US); PREDOVIC, Goran, Redmond, 98052-6399 (US); ZHANG, Chiqun, Redmond, 98052-6399 (US); MOUSAARAB NAJAFABADI, Maryam, Redmond, 98052-6399 (US); SABAU, Florin, Redmond, 98052-6399 (US); KARATZOGLOU, Antonios, Redmond, 98052-6399 (US); DHIFALLAH, Oussama, Redmond, 98052-6399 (US)
(74) Representative: Murgitroyd & Company

(56) References cited:
- US-A1- 2013 262 222
- US-A1- 20230 123 323

## Description

### BACKGROUND

Digital map services have revolutionized the way individuals navigate, explore, and interact with geographical information. One of the core features of these technologies is a map search engine that computes driving directions or routes (e.g., *routing* over a road network) for a user. For example, given a user query "from A to B," routing algorithms of the map search engine find the optimal driving route between A and B, where optimality typically refers to the fastest time or the shortest distance in the network. In an illustrative example, a map search engine field receives a user query indicative of a destination address the user desires to visit. The mapping service then calculates the user's location and multiple routes based on distance and estimated travel time between the user's location and the destination location. The mapping service then displays the different route options on a map, along with the estimated time it will take to reach the destination via each route. Once a route is selected, the mapping service then provides vehicle turn-by-turn navigation instructions, including which roads to take, when to turn, and any potential obstacles or delays along the way.

Patent documents US 2023/123323 A1 and US 2013/262222 A1 are representative of the available art.

US 2023/123323 relates to a computer system for generating suggested routes based on a determination of user familiarity with potential routes. The computing system can include natural language processing capabilities that can be used to select a suggested route based on the semantics of the user's spoken instructions.

### SUMMARY

Accordingly, there is provided a system, computer-implemented method, and computer storage media as detailed in the independent claims that follow. Additional aspects are detailed in the accompanying dependent claims.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

Various embodiments discussed herein relate to route optimization and query understanding for route/direction queries with complex user preferences. In an example, each route candidate is treated as a richly annotated document (e.g., a JSON file with metadata that describe various street segment attributes of the route). The routing engine, in addition to performing route optimization, acts as a retriever and ranker of route documents according to user intent in some embodiments. The invention ranks routes not just based on a simple cost model (e.g., driving time or distance), but based on many more or alternative factors according to user preferences and contextual data (e.g., historical conversations between a user and a conversational assistant).

In operation, some embodiments first receive a user-issued natural language question or command to provide navigational directions and/or a route to a destination location. For example, a user can issue a query, "take me from my home address (123) to location B, via road C." In response to the receiving of the natural language question or command issued by the user, some embodiments then extract one or more user preferences of the user and/or other contextual data. For example, a language model ingests such query and contextual data and performs natural language processing on the query to determine that "via road C" is an explicitly stated user preference in the query that the user wants to travel from their home address to location B by taking road C.

Based at least in part on the natural language question or command and the one or more user preferences of the user, some embodiments then rank a plurality of route candidates. For example, the LLM detects entities, augment the natural language question or command with the contextual data, and/or otherwise formulate a response so that a location search component takes the response as input and converts the detected location entities to geocoded locations (e.g., geo-coordinates). A routing engine then uses this information for ranking route candidates. For each route candidate, the routing engine in some embodiments generates a route document by stitching each data object of a respective road segment together. And the ranking includes ranking each route document based at least in part on a matching of natural language words in each route document to user intent (e.g., via fuzzy matching, semantic matching, TF-IDF, etc.) associated with the question or command.

Based at least in part on the ranking of the route candidates, some embodiments then cause presentation, at a map interface of a user device, of an indication of a response to the request to provide navigational directions or a route to the destination location. For example, such indication includes, in some examples, a language model-generated natural language summary of the user preference and/or at least one road associated with a respective route candidate. Additionally or alternatively, such indication includes a graphical element superimposed over a map interface that highlights at least one route candidate of the multiple route candidates. Additionally or alternatively, the indication includes a tooltip user interface element that highlights a property of at least one respective route candidate.

In light of various mapping technologies, various embodiments have the technical effect of at least improved query execution accuracy, improved query results, improved user experience, and improved information retrieval accuracy based on improved natural language understanding (NLU) and the ability to handle ambiguity, as described in more detail below.

### BRIEF DESCRIPTION OF THE DRAWINGS

The present invention is described in detail below with reference to the attached drawing figures, wherein:
FIG. 1 is a block diagram depicting an example computing system architecture suitable for implementing some embodiments of the disclosure;
FIG. 2 is a block diagram of a pipeline illustrating the inputs and outputs to derive one or more routes in response to a user query, according to some embodiments;
FIG. 3 is a schematic diagram illustrating how route documents are generated, according to some embodiments;
FIG. 4 is a schematic diagram illustrating how route candidates are optimized or ranked, according to some embodiments;
FIG. 5 is a screenshot of a user interface illustrating how user queries with respect to navigation are executed, according to some embodiments;
FIG. 6 is a flow diagram of an example process for executing a user request to provide navigational directions and/or a route to a destination location, according to some embodiments;
FIG. 7 is a flow diagram of an example process of ranking route candidates, according to some embodiments;
FIG. 8 is a schematic diagram illustrating how an L1 Retriever functions to compute route candidates responsive to a query, according to some embodiments;
FIG. 9 is a block diagram illustrating an example operating environment suitable for implementing some embodiments of the disclosure; and
FIG. 10 is a block diagram of an example computing device suitable for use in implementing some embodiments described herein.

### DETAILED DESCRIPTION

The subject matter of aspects of the present disclosure is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described. Each method described herein may comprise a computing process that may be performed using any combination of hardware, firmware, and/or software. For instance, various functions may be carried out by a processor executing instructions stored in memory. The methods may also be embodied as computer-usable instructions stored on computer storage media. The methods may be provided by a stand-alone application, a service or hosted service (stand-alone or in combination with another hosted service), or a plug-in to another product, to name a few.

Queries requesting driving directions over a road network are some of the most frequent queries issued to map search engines on desktop, mobile, and in in-car navigation. Existing map search engines resolve direction queries using a direction and/or routing service. The common form of a direction query is "from A to B" where A is a source location and B is a destination location. In resolving such queries, the routing service usually optimizes a simple cost function, most often aiming at a minimal travel time or distance. However, one technical problem with this is that these search engines do not optimize according to any other factor, which leads to inaccurate query execution results and an unsatisfactory user experience.

Users or vehicle operators, for instance, often have preferences about the routes they travel that go beyond optimal time or distance. For example, they might prefer to go from A to B: via a specific road or location, by avoiding specific roads or locations, by passing through scenic, historic, safe, less hilly, or twisty roads, via preferred motorcyclist roads, or via roads with a high Electric Vehicle (EV) charging station coverage. Some of the preferences are implicit, unarticulated, or indicated in a historical conversation or otherwise previously derived. With respect to implicit user preferences, for example, time and distance being equal, most users would prefer a safer and less stressful route even though they do not explicitly state as such in their query. However, existing map search engines are unable to compute navigational routes or directions based on any of these factors.

Adding simple user preferences to a direction query often breaks routing services, leading to an inability to return a relevant or any result at all. For example, for the query "from Sunnyvale to San Francisco via I-280" (I-280 is a major freeway in the area), some existing mapping technologies incorrectly interpret "via I-280" as the destination location or otherwise do not correctly optimize by taking the operator from Sunnyvale to San Francisco by traveling on the freeway I-280.

Another technical problem with these mapping technologies is limited natural language understanding (NLU), which negatively impacts the accuracy of information retrieval. Many existing map search engines of these mapping technologies are designed as semi-structured information retrieval systems. Accordingly, these systems are configured to process input queries containing only short snippets of text (e.g., user source location and desired destination) and a viewport (e.g., a portion of a map that is currently visible or displayed on the screen of a device). Mapping semi-structured information retrieval systems typically rely on structured queries or keyword searches. They typically lack the ability to process or understand natural language sequences in the same way humans do. This can lead to limitations in interpreting user intent and context. In an example, "User intent" or "Intent" refers to the underlying purpose or goal behind a user's message or query. It represents what the user is trying to accomplish or the action they want a conversational assistant to perform. Accordingly, because these mapping technologies are limited in NLU to interpret user intent, the retrieval accuracy is negatively impacted.

In an illustrative example, map search engines also fail to understand the intent when the query is augmented with the description as "from Sunnyvale to San Francisco via I-280." Interacting with the UI elements of existing search engines, users can do very broad selections, (e.g., they can select routes that avoid highways, toll roads, or ferries). However, understanding these as part of the query, or providing a more granular preference in the query of avoiding a specific highway, as opposed to all highways, is presently not supported by these mapping technologies due to their inability to perform robust NLU.

Another related technical problem is that these mapping semi-structured information retrieval systems have limited ability to handle ambiguity. Semi-structured systems struggle with ambiguous queries or those with multiple interpretations. For example, regarding a set of queries - query 1: "from Sunnyvale to San Francisco," query 2: "via I-280," the map search engine can have trouble disambiguating "via I-280" because it fails to take other contextual data into account, such as the previous turn of "from Sunnyvale to San Francisco." Without sophisticated natural language processing (NLP) capabilities, these mapping technologies do not effectively disambiguate user queries or provide relevant results in such cases.

Various embodiments of the present disclosure provide one or more technical solutions that have technical effects in light of these technical problems, as well as other problems, as described herein. Specifically, various embodiments are directed to direction/route optimization and query understanding for route/direction queries with complex user preferences and/or intents. Each route candidate, for example, is treated as a richly annotated document (e.g., a data object with metadata that describe various attributes of the route). The routing engine, in addition to performing route optimization, acts as a retriever and ranker of route documents according to user intent. The invention ranks routes not just based on a simple cost model (e.g., driving time or distance), but based on many more or alternative factors according to user preferences and other contextual data (e.g., historical conversations). Some of these factors are derived from explicitly stated preferences and others identified as relevant through data driven techniques, as described herein.

In operation, some embodiments first receive a user-issued natural language question or command (for example, via a user device) to provide navigational directions and/or a route to a destination location. For example, a user issues a query, "take me from my home address (123) to location B, via road C." In response to receiving the natural language question or command issued by the user, some embodiments then extract one or more user preferences of the user (and/or other contextual data). For example, a language model (e.g., a Large Language Model (LLM)) ingests such query and performs natural language processing on the query to determine that "via road C" is an explicitly stated user preference in the query that the user wants to travel from their home address to location B by taking road C. In another example, a user preference or other contextual data additionally or alternatively is stored to a database of historical conversations or other data where the user has expressed preferences of not taking specific highways, general preferences for taking scenic routes, smooth roads, non-windy roads, or the like.

Based at least in part on the natural language question or command and the one or more user preferences of the user, some embodiments then rank a plurality of route candidates. For example, some embodiments provide the natural language question or command and the one or more user preferences as input into a language model and the language model responsively detects entities, augments the query, and/or otherwise formulates a response so that a routing engine takes the response as input for ranking. For instance, some embodiments identify roads of candidate routes based on what location entities the language model has identified according to the query and the user preferences. The routing engine then tags, with metadata, each data object representing a road segment (e.g. indicative of a road) of each route candidate, of multiple route candidates in some examples. For each route candidate, the routing engine generates a route document by stitching each data object of a respective road segment together in some embodiments. And the ranking in some embodiments includes ranking each route document based at least in part on a matching of natural language words in each route document (which includes the metadata) to user intent (e.g., via fuzzy matching, semantic matching, TF-IDF, etc.) associated with the question or command.

In some embodiments, such metadata or route document includes such factors as an overall length of a respective route candidate, elevation changes for the respective route candidate, a shape of the route candidate, a smoothness level of the respective route candidate, each type of road segment (e.g., highway, two-lane road, etc.) indicated within the respective route candidate, a type and name of locations along the respective candidate routes (e.g., naming of nearby stores, neighborhoods, or the like). In this way, these factors are matched or compared to the user intent, user preferences, or other information in the query and/or other contextual data to determine the ranking.

Based at least in part on the ranking of the route candidates, some embodiments then cause presentation, at a map interface of a user device, of an indication of a response to the request to provide navigational directions or a route to the destination location. For example, such indication in some embodiments includes a language model-generated natural language summary of the user preference and/or at least one road associated with a respective route candidate. Additionally, or alternatively, such indication includes a graphical element superimposed over a map interface that highlights at least one route candidate of the multiple route candidates. Additionally, or alternatively, the indication includes a tooltip user interface element that highlights a property of at least one respective route candidate.

Various embodiments have the technical effect of improved query execution accuracy, improved query results, and improved user experience relative to existing mapping technologies. Instead of merely optimizing a simple cost function according to a minimal travel time or distance as existing mapping technologies do, various embodiments additionally or alternatively employ the technical solution of optimizing/ranking route candidates based on other factors, such as user preferences and/or other contextual data (e.g., previous conversations between a conversational assistant and an operator). As described above, users or vehicle operators often have preferences about the routes they travel that go beyond optimal time or distance, such as going from A to B via specific road or location, avoiding specific roads or location, passing through scenic routes, passing through historic routes, passing through safe routes, travelling on less hilly/twist routes, or travelling on roads with EV charging stations coverage. Various embodiments take one or more of these factors into account when ranking route candidates, which existing map search engines do not do. Accordingly, various embodiments improve the query execution accuracy, improved query results, and improved user experience relative to existing mapping technologies because there are additional or alternative factors that are relevant outside of distance and/or time.

As described above, adding simple user preferences to a direction query often breaks the routing services, leading to inability to return a relevant or any result at all. However, particular embodiments not only do not break when adding a user preference, but they return relevant results. For example, for the query "from Sunnyvale to San Francisco via I-280," various embodiments correctly interpret the user intent of "via I-280" as a means or road which the user wishes to take when travelling from Sunnyvale to San Francisco. This is because (1) a language model or other natural language processing functionality first correctly interprets such intent; and (2) such intent is identified/extracted as a user preference by a routing engine for optimization of a route.

As described in more detail below with respect to model evaluation, various embodiments (e.g., of the L2/L3 ranker) were able to match 51% of queries and were consequently 3 times more accurate than fastest-route-first (FRF) based technologies. This underpins the fact that a relevance-based approach as described herein can clearly help boost significantly the quality and accuracy of current mapping technologies.

Another technical effect is improved information retrieval accuracy based on improved natural language understanding (NLU). Various embodiments are not mapping semi-structured information retrieval systems that rely on structured queries or keyword searches. Rather, particular embodiments employ a language model (e.g., an LLM) that has the ability to process or understand natural language sequences (whether such sequences are structured or not) in the same way humans do. This leads to improvement in interpreting user intent and context. Accordingly, because embodiments are better able to perform NLU to interpret user intent, the retrieval accuracy is improved.

Another related technical effect is improved retrieval accuracy based on the ability to handle ambiguity. As described above, semi-structured systems struggle with ambiguous queries or those with multiple interpretations. However, various embodiments correctly disambiguate ambiguous queries based on performing NLP and using contextual data. For example, using the illustration above, regarding a set of queries - query 1: "from Sunnyvale to San Francisco," query 2: "via I-280," various embodiments disambiguate "via I-280" because it takes other contextual data (e.g., previous conversations, previous turns in the same conversation) into account, such as the previous turn of "from Sunnyvale to San Francisco." Thus various embodiments effectively disambiguate user queries or provide relevant results in such cases.

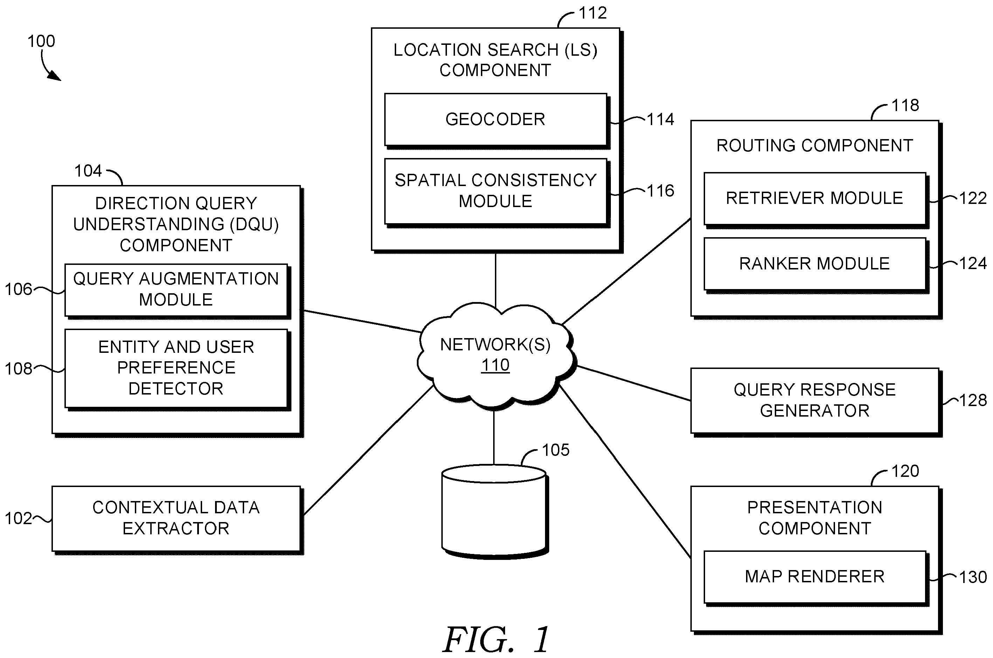

Turning now to FIG. 1, a block diagram is provided showing aspects of an example computing system architecture suitable for implementing some embodiments of the disclosure and designated generally as system 100. The system 100 represents only one example of a suitable computing system architecture. Other arrangements and elements can be used in addition to or instead of those shown, and some elements are omitted altogether for the sake of clarity. Further, as with system 100, many of the elements described herein are functional entities that are implemented as discrete or distributed components or in conjunction with other components, and in any suitable combination and location according to various embodiments.

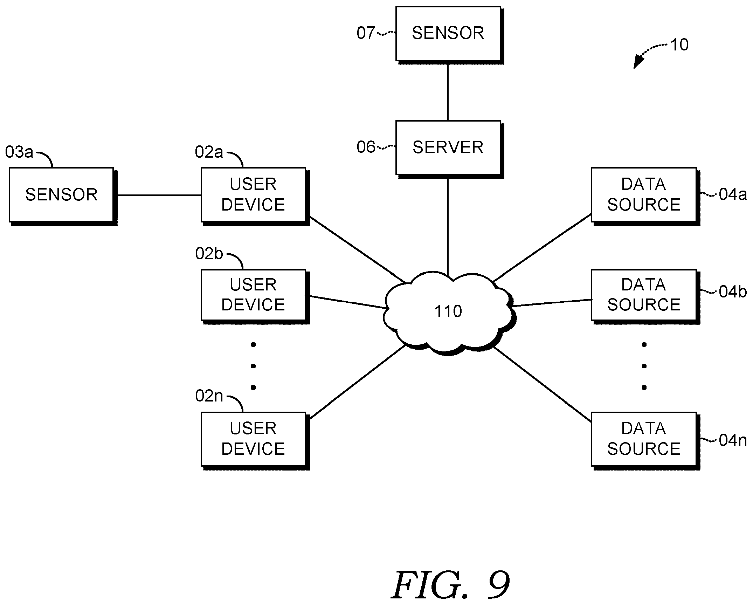

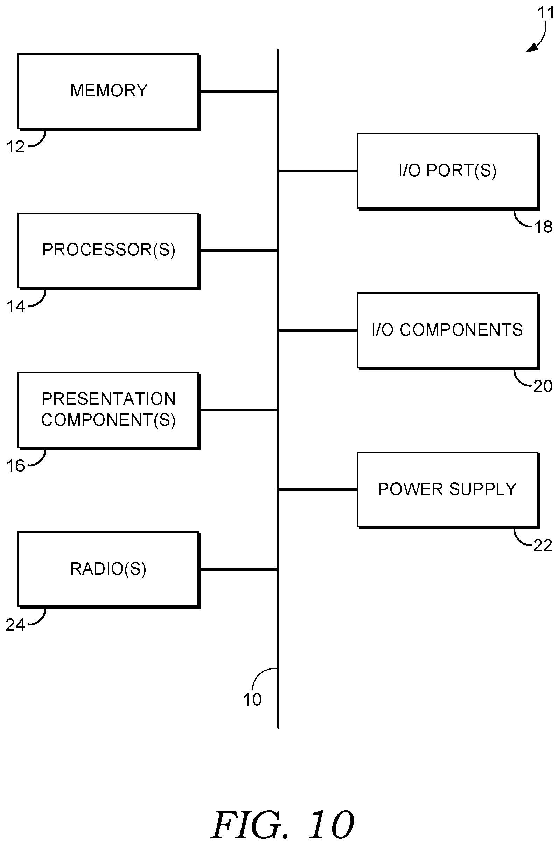

Example system 100 includes network(s) 110, which is described in connection to FIG. 9, and which communicatively couples components of system 100 including a contextual data extractor 102, a Direction Query Understanding (DQU) component 104, a Location Search (LS) component 112, a routing component 118, a presentation component 120, and storage 105. The system 100 is generally responsible for executing natural language command or question query to provide navigational directions and/or a route to a destination location. In some embodiments, these components in the system 100 are embodied as a set of hardware circuitry components (e.g., a hardware accelerator, such as a GPU AI hardware accelerator), compiled computer instructions or functions, program modules, computer software services, a combination thereof, or an arrangement of processes carried out on one or more computer systems, such as computing device 11 described in connection to FIG. 10, and the user device 02a and/or the server 06 of FIG. 9, for example.

In some embodiments, the functions performed by components of system 100 are associated with one or more personal assistant applications, services, or routines. In particular, such applications, services, or routines can operate on one or more user devices (such as user device 02a of FIG. 9), servers (such as server 06 of FIG. 9), can be distributed across one or more user devices and servers, or be implemented in the cloud. Moreover, in some embodiments, these components of system 100 are distributed across a network, including one or more servers (such as server 06 of FIG. 9) and client devices (such as user device 02a of FIG. 9), in the cloud, or reside on a user device, such as user device 02a of FIG. 9. Moreover, these components, functions performed by these components, or services carried out by these components are implemented at appropriate abstraction layer(s) such as the operating system layer, application layer, and/or hardware layer of the computing system(s). Alternatively, or in addition, in some embodiments, the functionality of these components and/or the embodiments described herein are performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), and Complex Programmable Logic Devices (CPLDs). Additionally, although functionality is described herein with regards to specific components shown in example system 100, it is contemplated that in some embodiment's functionalities of these components are shared or distributed across other components.

Continuing with FIG. 1, the contextual data extractor 102 is generally responsible for extracting or determining contextual data. Contextual data can be any set of data or metadata associated with a currently received natural language question or command. For example, where the contextual data includes user preferences, the contextual data extractor 102 accesses storage 105 (e.g., a database) to retrieve one or more data records that include the user preferences. For instance, a user in some instances has downloaded a mapping consumer application from a mapping platform. Responsively, such mapping platform requests that the user directly register or state their preferences with respect to the mapping platform or other geographical information. For example, a user can input names of preferred roads to use while traveling, types of roads (e.g., Interstates, as opposed to dirt roads), scenic routes, preferred locations to visit, or the like, which is then stored as a data record in storage 105. Alternatively, or additionally, the contextual data extractor 102 accesses storage 105 to retrieve data records of past natural language commands or questions issued by the user that indicate the user's preferences. For example, user preferences have been indicated in current or past conversations between the same user and a conversational assistant or other language model capable of generating text in some instances.

In some embodiments, the contextual data extractor 102 additionally or alternatively extracts contextual data from an output generated by one or more language models (e.g., an LLM). For example, each time the language model generates a response, such response is stored to a data record in the storage 105 so that the contextual data extractor 102 extracts such data record to use as contextual data for the language model at a later time in some embodiments. For example, such response include a clarifying question that the one or more language model generates in some instances. In some embodiments, the contextual data extractor 102 additionally or alternatively extracts contextual data from a current natural language command or question.

The DQU component 104 is generally responsible for interpreting user queries (e.g., natural language commands or questions) related to directions or navigation (e.g., detecting entities and user preferences) and generating text (e.g., via a language model) by augmenting such queries. For example, in some embodiments the DQU component 104 first parses the user query and contextual data to extract relevant information such as the starting point (source location), destination, mode of transportation (e.g., driving, walking, public transit), and any additional parameters like preferred routes or stops along the way.

The DQU component 104 includes a query augmentation module 106 and an entity and user preference detector 108. In some embodiments, the DQU component 104 represents or includes one or more language models (e.g., a LLM). For example, in some embodiments, the query augmentation module represents a first LLM and the entity and user preference detector 108 represents a second LLM.

In some embodiments, the one or more language models represent one or more machine learning models or other models that perform NLP. In some embodiments, a "language model" is a set of statistical or probabilistic functions that (e.g., collectively) performs Natural Language Processing (NLP) in order to understand, learn, and/or generate human natural language content. For example, a language model is a tool that determines the probability of a given sequence of words occurring in a sentence (e.g., via Next Sentence Prediction (NSP) or MLM) or natural language sequence. Simply put, it is a tool that is pre-trained to predict the next word in a sentence or other natural language character set. However, instead of predicting the next word in a sentence, the language model is trained, tuned, or prompted to generate responses to user questions or commands associated with directions or routes, as described in more detail below.

A language model is referred to as a "large" language model ("LLM") when it is trained on enormous amounts of data. Some examples of LLMs are GOOGLE's BERT and OpenAI's family of generative pre-trained transformer (GPT) networks, which include GPT-2, GPT-3, and GPT-4. GPT-3, for example, includes 175 billion parameters trained on 570 gigabytes of text. These models have capabilities ranging from writing a simple essay to generating complex computer codes - all with limited to no supervision. Accordingly, an LLM is a deep neural network that is very large (e.g., billions to trillions of parameters) and understands, processes, and produces human natural language from being trained on massive amounts of text. These models predict future words in a sentence based on sentences in the corpus of text they were trained on, allowing them to generate sentences which can be similar to how humans talk and write. In some embodiments, the LLM is pre-trained (e.g., via NSP and MLM on a natural language corpus to learn English), prompt-tuned, fine-tuned, and/or functions via prompt engineering, as described in more detail below.

The query augmentation module 106 is generally responsible for augmenting/supplementing the user query with other information based on contextual extracted by the contextual data extractor 102, and/or other data (e.g., a 1-shot or few-shot example) to be incorporated into a prompt. In some embodiments, the query augmentation module 106 represents a language model that constructs a first prompt to generate the output of augmenting the user query with other information. For example, in some embodiments, the first prompt (or second prompt described below) includes a zero-shot, one-shot, or few-shot examples of representative input-output pairs (e.g., a user-issued natural language question (input) and answer (output) pairs). As described herein, in some embodiments, an "example" refers to one or more model (e.g., representative or exemplary) inputs and/or outputs, where the output at least partially indicates how the response should be formatted (e.g., via sentence structure or syntax, word choices, length (e.g., number of words) in the output, etc.) according to an example input. In some embodiments, an "example" refers to natural language content that a model uses as a guide for structuring or styling its output, and the model typically does not use the example as a guide for deriving substantive natural language text (e.g., the subject or object in a sentence) in the example to copy over to the output. For instance, if a user-issued natural language command contains the phrase, "give me the directions to location A," an example is an input-output pair, such as "location A destination" (the example input) and "first, go to street 123, then street 456..." (the example output).

In some embodiments, the first prompt additionally or alternatively includes any of the data extracted by the contextual data extractor 102, such as previous turns in a conversation, previous conversations (both generated by the language model and users), or user preferences (e.g., a user preference to drive on certain types of roads or user preferences to avoid certain weather). In some embodiments, the query augmentation module 106 programmatically calls the LS component 112 to receive information (e.g., via the geocoder 114) to package in the first prompt. For example, in some embodiments, the geocoder 114 returns a "viewport" to additionally or alternatively be assembled, by the query augmentation module 106 within the first prompt.

In some embodiments, and as described in more detail herein, the first prompt (or second prompt described below) assembled by the query augmentation module 106 represents "hard" and/or "soft" prompts. For example, a prompt template (e.g., a "hard" prompt) is used at runtime or when the model is deployed. A prompt template is a pre-written text that is placed before (or used with) a user's natural language question or command input to guide the model to perform a specific task or generate a desired output. For example, a prompt template for summarizing a navigational journey could include a user question, such as "what are the directions to location A" and the prompt template, which says, "summary" or "Please write a short summary telling the user the quickest way to get to location A." In some embodiments, such templates leave certain words in the prompt template blank because the blank space depends on the use case provided by the runtime prompt. For example, the template can read, "give me directions to A, given source location_..." Such templates are performed based on performing NLP of the user's input to map it to the correct template in some embodiments.

In some embodiments, an LLM (represented by the query augmentation module 106) formulates the augmented query through its generative language capabilities. For example, the LLMs engage in concepts, such as "text summarization" to summarize information from the contextual data (extracted by the contextual data extractor 102), the user query, and/or a response to the user query. Text summarization is the process of distilling the main points or key information from a given dataset while retaining its essence. In the context of a Large Language Model (LLM), text summarization typically involves generating a condensed version of a longer dataset or passage while preserving its meaning and important details. For example, the LLM first performs preprocessing by removing irrelevant information, such as stop words, formatting, and potentially redundant sentences. The LLMs then analyze the text to understand its content, identifying key concepts, entities (e.g., via NER), and relationships within the dataset. This process involves natural language understanding (NLU) capabilities, including semantic analysis and contextual understanding. The LLM then determines which information is crucial for conveying the main points of the text. This can involve selecting significant sentences, paragraphs, or sections that encapsulate the essence of the document. Such determination in some embodiments is based on prompt engineering or tuning (e.g., prompt tuning), as described in more detail below. Based on the selected information, the LLM generates a concise summary that captures the main ideas and key details of the original dataset. This summary is crafted to be coherent and readable, using language generation techniques to produce fluent and grammatically correct sentences. In an illustrative example, an original user query can be "and some good restaurants to stop at." A previous conversation (or turn in the current conversation) that the user was a part of can include the phrase "show me a nice route from SF to LA" and "I would like to see some Indian restaurants in SF" (i.e., the contextual data). Accordingly, as an example, the LLM augments the original query by generating a new query that states, "Show me a route from SF to LA with some Indian restaurants to stop at in-between."

The DQU component 104 includes an entity and user detector 108. The entity and user preference detector component 108 is generally responsible for detecting one or more entities, including entities related to user preferences, in the user query - a natural language question or command by taking, as input, the enriched query/prompt generated by the query augmentation module 106. For example, the output of an augmented query generated by the query augmentation module 106 is included or a part of a second prompt (which includes few-shot examples, and prompt templates) in order to detect entities within the second prompt. For example, in some embodiments, the detector 108 detects entities in the second prompt via Named Entity Recognition (NER). NER is an information extraction Natural Language Processing (NLP) technique that identifies and classifies tokens/words or "entities" in natural language text into predefined categories. Such predefined categories are indicated in corresponding tags or labels in some embodiments. Entities can be, for example, specific user preferences (e.g., "via road B"), specific roads, names of people, specific organizations (e.g., restaurants), specific locations or landmarks, specific roads, specific times, specific quantities, specific monetary price values, specific music, and the like. Likewise, the corresponding tags or labels can be specific people, organizations, location, time, price (or other invoice data) and the like. NER and/or other NLP functionality can be used to understand and summarize natural language, such as tokenization (breaking text into words or phrases), stemming (reducing words to their base form), and part-of-speech tagging (identifying the grammatical role of words), semantic analysis (to derive meaning of a first word based on context/meaning of other words by the first word), and/or syntactic analysis (detecting the grammatical structure of a sentence or a sequence of words to determine its syntactic structure, or understand how words are organized in a sentence and how they relate to each other in terms of grammatical rules).

In some embodiments, the entity and user preference detector 108 additionally detects one or more spatial or temporal constraints within the second prompt. For example, if a user asks for directions between two places, the detector 108 can extract these locations and help determine the spatial boundaries within which the mapping platform needs to operate. In another example, if a user inputs "Find coffee shops near Central Park," the detector 108 can tag "Central Park" as a location entity and "coffee shops" as a user preference entity and destination location entity. By recognizing location entities, the detector 108 can infer geo-spatial constraints associated with the LS component 112 and the routing component 118, as described in more detail below.

The entity and user preference detector 108 can also recognize temporal entities such as dates, times, and durations from user natural language commands or questions within the second prompt. This allows the LS component 112 and the routing component 118 to understand temporal constraints associated with certain requests. For instance, if a user asks for "directions from A to B, via C," the detector 108 can determine the travel order to be A, then B, then C. Once the query is understood, the DQU component 114 interfaces with mapping services (e.g., the LS component 112 and the routing component 118) to generate and retrieve the appropriate directions or routes. The entity and user preference detector 108 therefore generates an output of detected entities and user preferences within the second prompt.

In some embodiments, the DQU component 104 additionally performs intent recognition. This component identifies the user's intent based on analyzing the output of the query augmentation module 106 (and/or the second prompt) to determine whether the user wants driving directions, walking directions, public transit routes, or other navigation-related information. In some embodiments, the first step in intent recognition is to tokenize and parse the second prompt. Tokenization breaks down this second prompt into individual words or tokens, and parsing identifies the syntactic structure of the contextual query, such as its grammar and semantics. Once the contextual query is tokenized and parsed, features are extracted from it. These features include words, phrases, syntactic patterns, context, and any other relevant linguistic or contextual information. Intent recognition models typically rely on machine learning techniques, particularly supervised learning. To train the model, a large dataset of labeled examples is prepared. In some embodiments, each labeled example includes a user query (or prompt) along with its corresponding intent label (e.g., "get driving directions," "find nearby restaurants"). Machine learning models, such as neural networks or statistical classifiers, are trained on the labeled dataset. During training, the model learns to recognize patterns in the features extracted from the user queries/prompts and associates them with the correct intent labels. The features extracted from the user queries/prompts are transformed into a numerical representation suitable for input into the machine learning model. In some instances, this involves techniques such as word embeddings or vectorization. Once trained, the intent recognition model is used to predict the intent of new, unseen user queries/prompts. The model takes the numerical representation of the user query/prompt features as input and outputs a probability distribution over the possible intent labels. A decision is made based on the output probabilities from the model. A threshold is applied to the probabilities to determine the most likely intent label for the user query/prompt. If the probability of a particular intent label exceeds the threshold, that label is assigned to the user query/prompt.

The LS component 112 is generally responsible for mapping geographical entities detected by the entity and user preference detector 108 to specific locations or points of interest. For example, the LS component 112 parses the output of the entity and user preference detector 108 - which has been augmented via the query augmentation module 106 and tagged with entities via the entity and user preference detector 108 - to understand the location or point of interest user are seeking. This parsing involves identifying keywords, phrases, and contextual data within such data.

The LS component 112 includes a geocoder 114 and a spatial consistency module 116. The geocoder 114 is generally responsible for translating or converting addresses or other identifiers of other geographical locations (e.g., names of stores) detected in the output of the entity and user preference detector 108 (e.g., augmented query tagged with entities and user preferences) of the DQU component 104 into geographic coordinates (latitude and longitude) that can be understood by the LS component 112. It involves converting textual location descriptions into precise geographic coordinates on the Earth's surface. In some embodiments, the geocoder 114 automatically detects a user device's location via Global Position System (GPS) functionality or the like (e.g., even if the user does not include the user's location in a question or command).

In an illustrative example, the geocoder 114 first programmatically call the DQU component 104 to retrieve each detected geographic location entity. For example, the DQU component 104 first parses a natural language command down into its individual components, such as street name, city, state, postal code, and country. This parsing ensures that the geocoder 114 can interpret and process each part of the address accurately. Responsively, the geocoder 114 accesses storage 105 (e.g., a large database), which includes mapping data, such as streets, cities, and points of interest. In some instances, this data come from various sources, including government agencies, commercial providers, and crowd-sourced platforms. The geocoder 114 then attempts to match the parsed address against the data in its database to find a corresponding geographic location. The geocoder 114 uses various matching algorithms (e.g., via fuzzy matching or spatial indexing, such as R-trees) to find the best match, taking into account factors such as spelling variations, abbreviations, and proximity to known landmarks. Once a match is found, in some embodiments the geocoder 114 assigns geographic coordinates (latitude and longitude) to the address based on the location information stored in storage 105. These coordinates represent the precise position of the address on the Earth's surface. In some embodiments, the geocoder 114 provides a measure of the accuracy or reliability of the geocoded result. This quality assessment include indicators such as the confidence level of the match, the precision of the coordinates, and/or any potential discrepancies or ambiguities in the input address. In some embodiments, the geocoder 114 lastly returns the geocoded result to a user device in a standardized format, such as a JSON or XML response, and/or returns the result to the routing component 118, and/or returns this information as an input to the DQU component 104. This output includes the latitude and longitude coordinates of the geocoded location, along with additional metadata such as the address components and quality indicators, in some embodiments. The LS component 112 thus indexes a vast database of geographical data, including points of interest, addresses, geocoordinates (e.g., latitude and longitude), landmarks, and/or businesses. It efficiently retrieves relevant entries based on the parsed output of the detector 108 and the geographic coordinates obtained through geocoding.

The spatial consistency module 116 is generally responsible for ensuring spatial and temporal consistency (i.e., that the locations determined by the geocoder 114 are identified correctly and visited in the preferred order). In some embodiments, the spatial consistency module 116 determines that the locations determined by the geocoder 114 are identified correctly based on distance being within a threshold or a smallest distance relative to the specified source location, one or more intermediate locations (e.g., "A to B, via C" where C is an intermediate location), and/or the destination location. For example, if the user query states to "give me directions to A via street B), the geocoder 114 in some instances first calculates the user's position corresponding to the source location. Then the spatial consistency module 116 determines that there several same B named entities (e.g., the same name of a retailer) spread across multiple locations. Responsively, the spatial consistency module 116 then calculates the distance between the source location and the different locations with the same B name and/or calculate the distance between the intermediate location and each location with the same B name. Based on the different same named B locations being within a threshold distance (e.g., 20 miles) of the source location and/or the intermediate location, the spatial consistency module 116 identifies corresponding locations and/or remove/prune out other locations since they are too far away to indicate the user's intent.

The routing component 118 is generally responsible for retrieving and ranking multiple route candidates, each of which is a candidate route/set of directions indicative of a candidate response to the user query. In other words, the routing component 118 generates optimal routes between two or more locations based on various factors such as user preferences, contextual data, distance, travel time, traffic conditions, and/or mode of transportation. Accordingly, in some embodiments, the routing component 118 takes as input, contextual data extracted from the contextual data extractor 102, the output generated by the DQU component 104, and/or the output produced by the LS component 112 to generate a response.

The routing component 122 includes a retriever module 122 and a ranker module 124. The retriever module 122 is generally responsible for retrieving (e.g., from data records in storage 105) multiple route candidates according to contextual data, user preferences, or the like. For example, in some embodiments the retriever module 122 generates multiple "Single-Source Shortest Path" (SSP) routes over the road network and has increased recall in matching user preferences (e.g., detected by the entity and user preference detector 108). SSP refers to finding the shortest path between a single source location (starting point) and all other vertices (destinations) in a graph data structure (e.g., a directed acyclic network graph). "Multiple diverse SSSP routes" indicates that the retriever module 122 calculates not just one shortest path, but several diverse routes that satisfy certain criteria, such as user preferences, minimizing distance, minimizing time, or avoiding specific features like tolls or highways. "Recall" in this context refers to the ability of the retriever module 122 to retrieve relevant routes that match the user's preferences. By calculating multiple diverse routes and considering various factors such as traffic conditions, mode of transportation, and user-defined preferences, the retriever module 122 aims to increase the likelihood of providing routes that align closely with what the user desires or requires for their journey.

In some embodiments, each candidate route is represented as a document by enriching data objects representing route candidates with global and local (per road segment) metadata or other information. These documents are described in more detail below.

The ranker module 124 is generally responsible for ranking each route candidate generated by the retriever module 122. For example, the ranker module 124 ranks route candidates based on optimality (e.g., distance and time), explicit user preferences, implicit user preferences, and/or other factors indicated in contextual data. The ranking of route candidates is described in more detail below.

The query response generator 128 is generally responsible for generating a response to the original user query, which takes as input, the output from the contextual data extractor 102, the DQU component 104, the LS component 112, and/or the routing component 118. For example, the query response generator 128 includes or is represented by another language model that performs generative text capabilities, such as a text summary that summarizes, in natural language directions and/or a route to a destination location. For instance, a third prompt includes the augmented query from the query augmentation module 106, the entities and user preferences detected via the entity and user preference detector 108, additional user preferences extracted by the contextual data extractor, and/or raked route candidates generated by the routing component 118. Responsively the query response generator 128 summarizes the top-ranked route, by providing turn-by-turn navigation instructions in natural language to guide users along the calculated top-ranked route. These instructions in some instances include details such as upcoming turns, lane guidance, exit numbers, and estimated arrival times, or the like.

The presentation component 120 is generally responsible for causing presentation of information related to the mapping platform. For example, in some embodiments, the presentation component 120 causes presentation of a map and an indicator superimposed over the map representing an optimized route, and a natural language output generated by the query response generator 128. In some embodiments, the presentation component 120 comprises one or more applications or services on a user device, across multiple user devices, or in the cloud. For example, in one embodiment, presentation component 120 manages the presentation of content to a user across multiple user devices associated with that user. Based on content logic, device features, associated logical hubs, inferred logical location of the user, and/or other user data, presentation component 120 determines on which user device(s) content is presented, as well as the context of the presentation, such as how (or in what format and how much content, which can be dependent on the user device or context) it is presented and/or when it is presented. In particular, in some embodiments, presentation component 120 applies content logic to device features, associated logical hubs, inferred logical locations, or sensed user data to determine aspects of content presentation.

In some embodiments, presentation component 120 generates user interface features (or causes generation of such features) associated with pages. Such features can include user interface elements (such as graphics buttons, maps sliders, menus, audio prompts, alerts, alarms, vibrations, pop-up windows, notification-bar or status-bar items, in-app notifications, or other similar features for interfacing with a user), queries, and prompts. In some embodiments, a personal assistant service or application operating in conjunction with presentation component 120 determines when and how to present the content.

The presentation component 120 includes a map renderer 122. The map renderer 122 is generally responsible for rendering (e.g., at a graphical user interface) a map and associated data. For example, the map renderer 130 first divides a geographic area (as identified by the geocoder 114) into small rectangular tiles, each representing a portion of the map at a specific zoom level. These tiles are then pre-rendered at different zoom levels and stored in a tile cache for fast retrieval during map display. Tile generation, in some instances, uses rendering engines like Mapnik or TileMill to rasterize vector map data into image tiles.

In some embodiments, the map renderer 130 then provides map styling, such as customizing the appearance of the map elements, such as roads, labels, and landmarks, to enhance readability and visual appeal. Map styling is defined by using map styling languages like Mapbox GL Styles or Google Maps Styling Wizard, which allow developers to specify colors, line styles, label fonts, and other visual properties for map features.

In some embodiments, the map renderer 130 then performs map projection by projecting the geographic data onto a two-dimensional surface for display on a flat screen. In some embodiments, this involves transforming the coordinates of map features from geographic coordinates (latitude and longitude) to Cartesian coordinates (x and y) using map projection techniques like Mercator projection, Albers projection, or Lambert conformal conic projection. The map renderer 130 then processes the map data and styling information to generate the final map image for display. This pipeline involve several stages, in some instances, including data retrieval, feature selection, styling application, geometry transformation, and rasterization. Each stage applies transformations and rendering techniques to create the map image efficiently.

In some embodiments, the map renderer 130 provides interactive features, such as panning, zooming, and rotation, to allow users to explore the map dynamically. These interactive features are implemented using client-side scripting languages like JavaScript, which handle user input events and update the map display accordingly in real-time in some instances.

In some embodiments, the map renderer 130 employs various optimization techniques to improve performance and reduce rendering time. This includes, for exapmle caching frequently accessed tiles, using vector tiles instead of raster tiles for better scalability, implementing level of detail (LOD) techniques to prioritize rendering of high-detail areas, and optimizing rendering algorithms for parallel processing.

In some embodiments, the map renderer 130 adapts to different devices and screen sizes to ensure optimal display across various platforms, including desktop computers, smartphones, and tablets. They can use responsive design principles and device detection techniques to adjust map styling, tile resolution, and interactive features based on the user's device and viewport size.

Example system 100 also includes storage 105. Storage 105 generally stores information including contextual data (extracted by the contextual data extractor 102), computer instructions (for example, software program instructions, routines, or services), data structures, and/or models used in embodiments of the technologies described herein. In some embodiments, storage 105 represents any suitable data repository or device, such as a database, a data warehouse, RAM, cache, disk, RAID, and/or a storage network (e.g., Storage Area Network (SAN)). In some embodiments, storage 105 includes data records (e.g., database rows that represent each cluster) or other data structures (e.g., key-value pairs) that contain any suitable information described herein. In some embodiments, each record is called or requested and returned, over the computer network(s) 110, depending on the component needing it, as described herein.

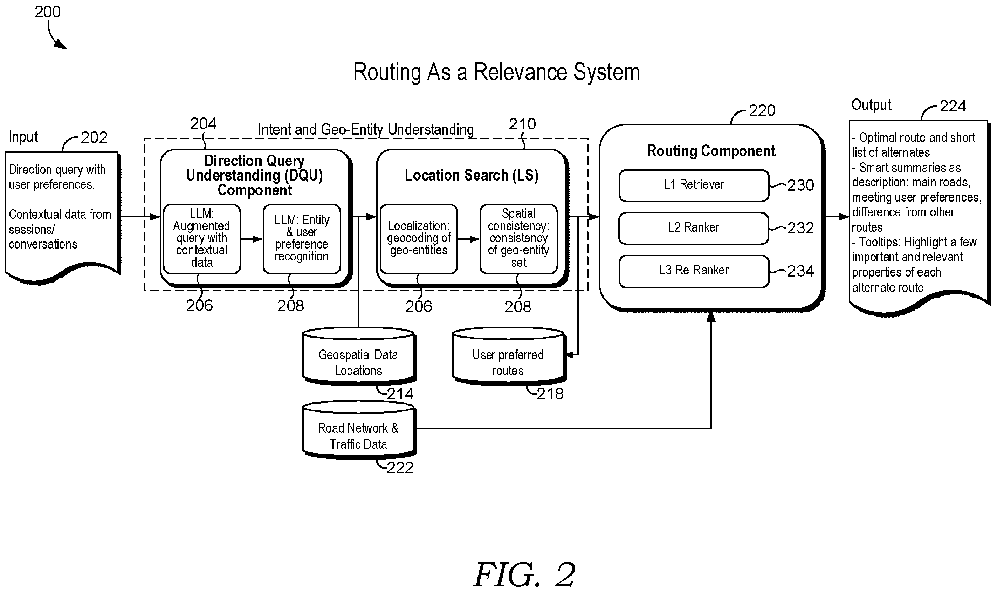

FIG. 2 is a block diagram of a pipeline illustrating the inputs and outputs to derive one or more routes in response to a user query, according to some embodiments. In some embodiments, one or more components of FIG. 2 represent one or more components of the system 100 of FIG. 1. For example, in some embodiments, the Direction Query Understanding (DQU) component represents the DQU component 104 of FIG. 1. 206 of FIG. 2 represents functionality performed by the query augmentation module 106 of FIG. 1. 208 represents functionality performed by the entity and user preference detector 108 of FIG. 1. The Location Search (LS) component 210 represents the LS component 112 of FIG. 1. The localization functionality 212 represents the functionality performed by the geocoder 114 of FIG. 1. The spatial consistency functionality 216 represents the functionality performed by the spatial consistency module 116 of FIG. 1. The routing component 220 represents the routing component 118 of FIG. 1. The L1 retrieval functionality 230 represents what is performed by the retriever module 122 of FIG. 1. The L2 ranker 232 and L3 re-ranker represents the functionality performed by the ranker module 124 of FIG. 1. And the output 224 represents what is generated by the query response generator 128 of FIG. 1.

At a first time, the input 202 (which includes one or more direction queries with one or more user preferences and contextual data from sessions or conversations) is fed into the DQU component 204 of FIG. 2. For example, a direction query can be "take me to C, by going around the lake." Additionally contextual data in the input 202 includes, for example, a prior question about the lake, such as "what lake is nearest to me?" as well as a conversational assistant-generated response "Lake Washington," as well as the user's detected location D (i.e., the source destination).

The DQU component 204 performs pre-processing and information extraction from the direction query of the input 202, including geo-entity recognition (e.g. detecting the source and destination locations). The role of DQU component 204 is to identify if a user query has direction intent and if so, tag the elements of that user query. The tags could include whether a term is: source, destination, time or distance (e.g. 'time/distance between Seattle and Redmond'), mode of transportation ('by car'). Though the tag space is small, the problem is challenging. For example: queries without connecting words (from/to), such as 'Seattle Washington' could refer to the city Seattle in the state Washington or to directions between the cities of Seattle and Washington, D.C. Other factors that make the problem challenging include: omission of source and destination in the query, permuting the order of source or destination, having spurious terms, having a variety of connecting words, and mostly - having language or country specific direction search patterns.

Adding user preferences to the query, or expressing them over a session, introduces another level of complexity. Below is a list of several categories of queries with user preferences which current routing systems fail to resolve, while various embodiments do resolve.

Queries with via/avoid preferences. Users might prefer going through or avoiding certain roads or places. Synonyms of via and avoid in different languages could be used. E.g. in English, the same preferences could be expressed as 'using' or 'not going through' respectively. Queries with multiple locations. Existing map and directions search technologies struggle when a query has multiple locations. Multiple locations require also proper temporal reasoning and understanding the subtlety of connecting words such the prepositions 'to' and 'through.'

Queries with sentimental or functional user preferences. For example, the query 'scenic route from A to B'. Other user preferences expressing sentiment could be: safer, less noisy, less hilly, going through mountains, etc. Functional user preferences could include routes with EV stations. The problem is again one of relevance - there is a need to understand the sentiment of the preference on a DQU level, have suitable representation that reflects these properties in routes, and then do the correct retrieval and ranking.

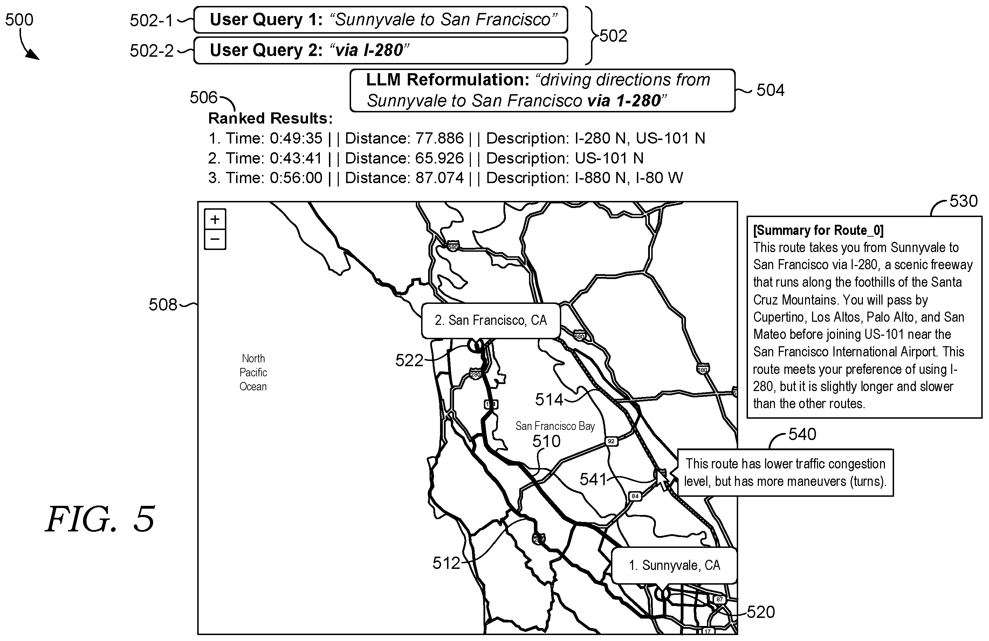

Partial queries, adding information to previous queries in a search session or chat conversation (e.g., "via I-280" of the query 502-2 of FIG. 5). Once the query is reformulated/augmented it often reduces to one of the other three categories discussed above, e.g. it becomes a query with 'via' or other type of preferences and with potentially multiple locations. Various embodiments build the DQU component 204 by repurposing subcomponents and the LLM prompts for the problem of identifying the above categories of direction queries with preferences,

The DQU component 204 makes an initial LLM call where the input comprises all queries in the session/conversation with their corresponding results. The model is prompted (via a first prompt) to identify all relevant information from the previous queries and results. The first prompt then instructs the model to augment suitably the current user query with the contextual data per block 206. For example, using the illustration above, the query "take me to C, by going around the lake" is changed to "take me [from D] to C, by going around [Lake Washington]." The LLM, for example, can be prompt engineered, prompt-tuned, and/or fine-tuned to map different user queries and contextual data sets (e.g., a first prompt) to a given augmented query, as described in more detail below. The augmented query 206 is added to temporary memory (e.g., cache or RAM) for subsequent query calls in the session.

Prompt engineering is the process of guiding and shaping ML model responses by relying on the user, or prompt engineer, to craft more carefully phrased and specific queries or prompts. With prompt engineering, the weights are frozen (i.e., its values remain the same from pre-training) such that they are not adjusted during prompt engineering. A "prompt" as described herein includes a current user query, contextual data, user preferences, one or more examples (e.g., one-shot or two-shot examples), a hard prompt or template, and/or a numerical embedding (e.g., a "soft" prompt). In some embodiments, an "example" is indicative of few-shot prompting, which is a technique used to guide large language models (LLMs), like GPT-3, towards generating desired outputs by providing them with a few examples of input-output pairs.

The prompt engineering process often involves iteratively asking increasingly specific and detailed questions/commands/instructions or testing out different ways to phrase questions/commands/instructions. The goal is to use prompts to elicit better behaviors or outputs as indicated in the predicted response(s) of the output(s) from the model. Prompt engineers can experiment with various types of questions/commands/instructions and formats to find the most desirable and/or relevant model responses. For example, a prompt engineer can initially provide a prompt (e.g., "what are the entities specified in the current query"). However, this may not be specific enough/or elicits the wrong predicted response(s) (e.g., listings non-geographical entities, such as persons), so the prompt engineer can formulate another prompt template that states, "what are the source, destinations, and waypoints specific in the current query" and the response then correctly list the source, destination, and waypoints (i.e., the correct geographical entities). The prompt engineer is satisfied with this prompt. Subsequent to this satisfactory answer, particular embodiments save the corresponding event data prompt as a template. In this way, the prompt template (e.g., a "hard" prompt) is used at runtime or when the model is deployed.

Prompt tuning is the process of taking or learning the most effective prompts or cues (among a larger pool of prompts) and feeding them to the encoder/decoder block(s) of the model as task-specific context. Unlike prompt engineering, prompt tuning is not about a user formulating a better question/command or making a more specific request. Prompt tuning means identifying more frequent or important prompts (e.g., which have higher node activation weight values) and training the encoder/decoder block(s) of the language model to respond to those common prompts more effectively with correct predicted response(s). The benefit of prompt tuning is that it is used to modestly train models without adding any more inputs or prompts (unlike fine-tuning), resulting in considerable time and cost savings.

In some embodiments, prompt tuning use soft prompts only, and does not include the use of hard prompts. Hard prompts are manually handcrafted text prompts (e.g., prompt templates) with discrete responses, which are typically used in prompt engineering. Prompt templating allows for prompts to be stored, re-used, shared, and programmed. Soft prompts are typically created during the process of prompt tuning. Unlike hard prompts, soft prompts are typically not viewed and edited in text. Soft prompts typically include an embedding, a string of numbers that derive knowledge from the encoder/decoder block(s) (e.g., via pre-training). Soft prompts are thus learnable tensors concatenated with the input embeddings that are optimized for a dataset. In some embodiments, prompt tuning creates a smaller light weight model which sits in front of the frozen pre-trained model with weights set during pre-training). Therefore, prompt tuning involves using a small trainable model before using the LLM. The small model is used to encode the text prompt and generate task-specific virtual tokenized tokens. These virtual tokenized tokens are pre-appended to the prompt and passed to the LLM. When the tuning process is complete, these tokenized virtual tokens are stored in a lookup table (or other data structure) and used during inference, replacing the smaller model.

Using the augmented query 206, the system engages in block 208 by performing a second LLM call with first prompt instructing it to identify: the type of user preferences, the sentiment level, all mentioned locations, and/or the correct temporal order the user wants to visit such locations. In some embodiments, there are two types of preferences: "via" and "avoid." Various embodiments define two sentiment levels: "must" and "prefer" (prefer is default), keeping in mind that many words in different languages could express the same preference type or sentiment. The LLM interprets the user preferences and maps them to the above types and sentiment levels. If not successful, the LLM ignores the respective preferences and outputs a standard direction query with only a source and destination. In case of identified user preferences, the output of the LLM at block 208 is a list of string patterns of the form: <type:sentimentlevel:parameters>. It also outputs a list of the locations mentioned in the query. In an illustrative example of the output at 208: Query: 'from San Francisco to San Jose via I-280, through Sunnyvale and make sure to avoid Tenderloin'; Preferences: [<via:prefer:I-280>, <via:prefer:Sunnyvale>, <avoid:must:Tenderloin>]; Locations: San Francisco (source), Sunnyvale, Tenderloin, San Jose (destination).

In another example, Query: 'scenic route from San Francisco to Monterey without many turns'; Preferences: [<via:prefer:scenic>, <avoid:prefer:turns>]; Locations: San Francisco (source), Monterey (destination).

The system in FIG. 2 is general enough and DQU can easily be extended to other preference types by adding them to the LLM prompts with suitable examples. The LLM with respect to 208 (which are the same or different LLM than the one used for 206) and thus takes the augmented query from 206 as input (the second prompt) in order to detect entities and the user preferences (e.g., via NER and user intent recognition). For example, the LLM of 208 tags each the augmented query as follows, "take me (person) [from D] (location) to C (location), by going around [Lake Washington] (location)," which is the DQU output.

The DQU component 204 then passes the DQU output to the LS component 210. In other words, the locations detected at 208 are further processed by the LS component 210. The LS component 210 performs understanding of the geo-entities' ontology type, e.g. businesses, addresses, points of interest, or other places (cities, postal codes etc.), after which they are geocoded, e.g., localized with their longitude and latitude.

Routing optimization APIs anticipate (latitude, longitude) coordinate pairs for the source and destination location between which they need to compute SSSP. Some APIs allow specifying textual locations, running LS as part of the routing optimization engine, here for clarity the two are decoupled. To obtain the coordinates, the localization component 212 geocodes the source and destination. The localization component 212 also geocodes all intermediate locations recognized as preferences in 208 of the DQU component 204. Geocoding returns a list of ranked results for every entity provided to it.

Various embodiments ensure that from each list of ranked entities the entity that is spatially consistent with the rest of the recognized entities in the query is chosen per the spatial consistency component 216. To illustrate, consider the query: "from San Francisco to Los Angeles through Pasadena." Suppose we have correctly localized San Francisco and Los Angeles. Suppose also that in geocoding Pasadena the system returns the following list of potential results: {1. Pasadena, Texas; 2. Pasadena, California}. Various embodiments first choose the one which has minimal distance to either the source or the destination. Various embodiments then compare if this distance is less than the distance between the source and destination. If it is, various keep this entity from the list and remove the rest. If no location from the geocoded list of intermediate locations passes the second check, some embodiments remove this user preference returning a message to the user that their user preference cannot be met. In the example, the check will keep Pasadena, California and remove Pasadena, Texas. The reason behind the second heuristic check is that users are unlikely to take routes that will increase their distance between source and destination more than twice. If they indeed need such detour, then most likely their intent is to make a stop at the intermediate location. Stops, also waypoints (intermediate locations between source and destination), are supported in routing APIs by running repeatedly SSSP optimization between each two neighboring waypoints. Identifying the most relevant routes could be extended to this waypoint case too, by applying it separately to each sub route between every two waypoints.

Accordingly, per the localization 212 particular embodiments geocode the geo-entities indicated in the DQU output (e.g., by translating the "location" tags into geographic coordinates (latitude and longitude) as described with respect to the geocoder 114). For example, geocoding algorithms (e.g., Bing Maps Geocoding, NOMINATUM, MAPBOX GEOCODING API, GOOGLE MAPS GEOCODING API, etc.) match text in the DQU output against a database of known locations, addresses, and landmarks (i.e., the geospatial data locations 214) to determine their corresponding coordinates.

In some instances, localization per 212 geocodes several candidates because there are, for example, several existing D locations, C locations, and/or several Lake Washington (as indicated in the user query). Therefore, the spatial consistency module 216 reduces or otherwise filters these geocoded candidates based on distance metrics. For example, using a linked list data structure, if it was detected that the user's location was at a first location, only those D, C, and Lake Washington locations that are nearest to the user's location are kept on the list (and other further away locations are pruned or popped off the linked list).

The "preferred routes" database 218 includes specific user preference data according to routes (and/or roads). In some embodiments, these are explicitly preferred/non-preferred routes or implicitly learned routes. In an example illustration of an explicitly preferred route, in a previous conversation, a user states, "I like going around Lake Washington via Renton," or "I really don't like the route you provided for me" (suggesting that the user does not prefer the route the routing component 220 previously calculated). In an example illustration of an implicitly learned route, in a prior session or conversation relative to the user query in the input 202, the routing component 220 and query response generator 128 returned a route that the driving operator used (e.g., as detected via a GPS module that matches a user device's location (and thus vehicle) against a recommended route). Although the user may not have said "I like this route" or any similar explicit commentary, various embodiments store this route to the preferred routes database 218 because the user used the route. In some embodiments, the preferred routes database 218 is a privacy compliant database due to the possibility of the database 218 containing sensitive or personal data. For example, the database 218 is encrypted, obfuscated, or otherwise anonymized. In some embodiments the database 218 include any other suitable user preferences, such statements to avoid specific roads or location, affinity for scenic routes, affinity for historic routes, affinity for safe routes, affinity for less hilly/twist routes, or affinity for roads with EV charging stations coverage.

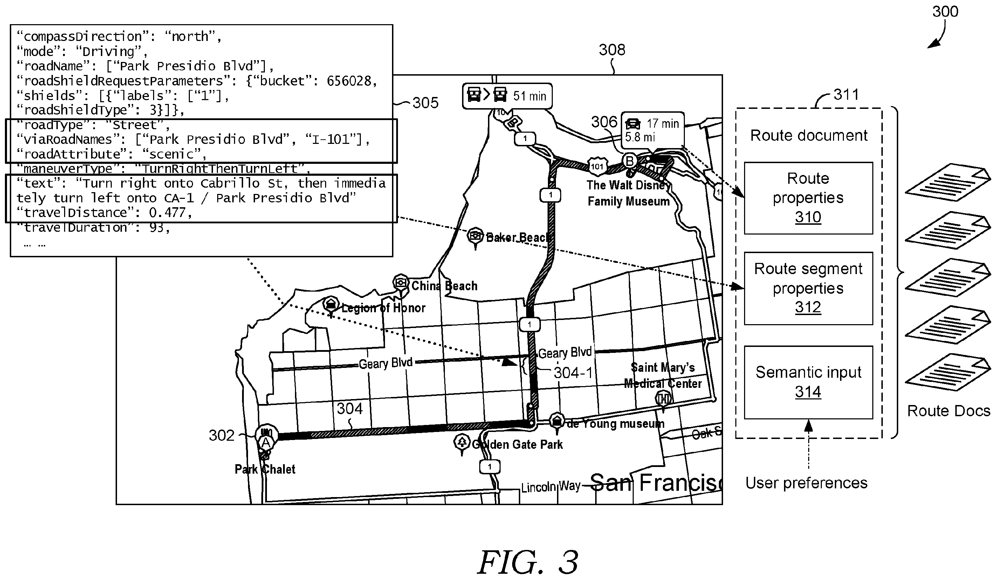

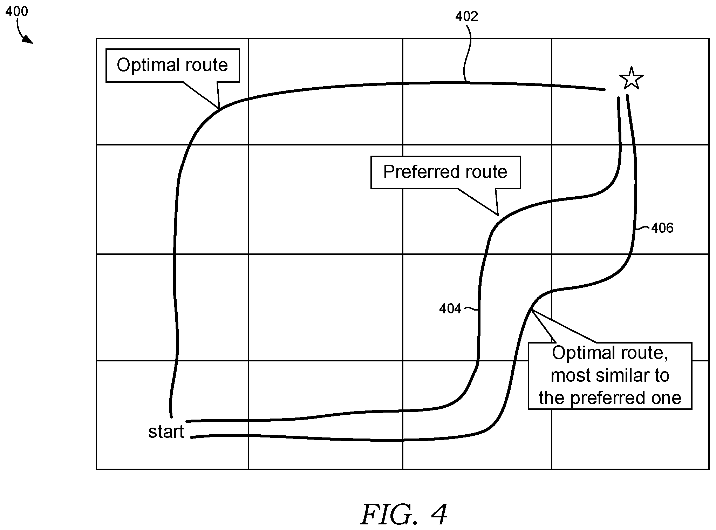

The routing component 220 takes, as input, the preferred routes from the route database 218, the spatially consistent geo-entities from 216, and/or the DQU output from the DQU component 204 in order to retrieve and rank various route candidates. Some embodiments of the routing component 220 are described in more detail with respect to FIG. 3 and FIG. 4. The L1 retriever 230 derives multiple SSSP routes (e.g., routes optimized by time and distance via Dijkstra's algorithm and/or A*(star) search), as well as routes from the preferred routes databased 218 and/or other user preferences. The L1 retriever 230 retrieves the candidate routes matching user preferences and constructs a representation of the route candidates as enriched documents (enriched data objects with metadata about road segments/routes), as described in more detail below with respect to FIG. 3.

The L2 ranker 232 ranks the route candidates determined by the L1 retriever 230 based on optimality (e.g., via Dijkstra's algorithm), user preferences (including preferred routes), and/or other latent factors, as described in more detail below (e.g., FIG. 4). For example, user's preferred routes and routes that meet user preferences are weighted the highest, where the preferred routes are relevant to the user query. And the optimality routes are incrementally weighted lower than the user preferences and preferred routes based on how close and the time it takes to traverse the route. For example, using the illustration above, because the user may have explicitly stated a route preference of "I like going around Lake Washington via Renton," and the DQU output is "take me (person) [from D] (location) to C (location), by going around [Lake Washington] (location)," the L2 ranker 232 rank first (highest recommendation) a first route that goes from location D to location C by passing through the city of Renton. The second highest ranked route is a second route that still goes from location D to location C, but by using a different road, which is faster and/or less distance than the first route. A third highest ranked route is slower and/or more distanced than the first route and the second route.

The L3 ranker 234 modifies (or is a part of) the ranking of the L2 ranker 232 by doing further processing on what "going around Lake Washington" means. For example, the L3 re-ranker 234 includes or represent a LLM (a Generative Pre-trained Transformer (GPT) V model) that would first parse and understand the language "around the lake" to grasp the user's intent. This involves natural language processing capabilities similar to those of existing GPT models in order to comprehend that the user is likely interested in locations or points of interest near a lake. The L3 re-ranker 234 model then interacts with a mapping service's API to retrieve relevant map data. This could include information about lakes, surrounding areas, points of interest, and geographic features. In some embodiments, models like Contrastive Language-Image Pre-training (CLIP) is used to learn representations of map images (e.g., of Lake Washington) and text in a joint embedding space. This means it can understand images and text in relation to each other, allowing it to perform a variety of tasks such as image classification, image generation, and image-text retrieval. For example, this model converts a map of Lake Washington into a rich description via CLIP.

Using its understanding of the DQU output and the retrieved map data, the L3 re-ranker 234 analyzes the spatial information to identify areas "around the lake," for example. This could involve identifying landmarks, businesses, parks, or other points of interest in the vicinity of lakes. Based on its analysis, the L3 re-ranker 234 generates a response tailored to the user query. This could include textual descriptions, directions, or even visual representations of places around the lake.

The query response generator 128 takes the output of the L2 and/or L3 rankers 232/234 to generate the output 224, which includes an optimal (highest ranked route candidate) route and short list of alternative routes (e.g., via superimposing visual data over a set of roads). The output 224 further includes a smart summary, which is a description of the main roads used in the optimal route (and/or other routes) that meet the user preferences. The output 224, in some embodiments, further includes one or more tooltips, which highlight one or more properties of the alternate routes (and/or the optimal route). A "tooltip" is a user interface element found in graphical user interfaces (GUIs) such as websites and software applications. It typically appears as a small, contextual pop-up box containing information related to a specific element or control on the interface, such as a button, link, or icon. Tooltips are designed to provide additional information or clarification about the purpose or function of the associated element. They are often triggered when the user hovers their cursor over the element for a certain period of time or clicks on it. Tooltips can contain text, images, or sometimes even interactive elements, depending on the application or website's design. For example, in response to receiving an indication that a cursor has hovered over a road in the optimal route on the map, a tooltip displays the smart summary or user preference data such as, "this road has more than 2 lanes, just the way you like it."

Some embodiments train and/or evaluate (e.g., validate and/or benchmark) the L2 ranker 232 (e.g., a neural network) and/or the L3 ranker 234 by using a mixed query set that contains a small real-world dataset and a synthetically generated one. In some embodiments, the real-world dataset comes from 1 week of Directions query UX logs of a desktop map application. In some instances, the logs have been preprocessed and filtered to contain solely queries with 3 alternate routes and for which the logged click events show some type of user engagement with the alternate routes (e.g., user clicked on an alternate route on the map or clicked to expand the instructions of a specific route other than the top one). From that, some embodiments have subsampled 200 examples, which are joined these with the corresponding backend logs that contain the route properties.

Ultimately, each record in the joined dataset contains a set of 3 alternate routes ordered in the way they were shown to the user, the respective path coordinates, the route properties, and the UI user activity (e.g., the user's click sequence and engagement with each of the routes (if any)) in some instances. The synthetic dataset has been used primarily to support the "via" and "avoid" scenarios, since there are no existing logs for these yet. Logged user clicks can often help draw useful conclusions about the users' choices but they can also produce noisy data. For this reason, human judges or annotators (e.g., 3 of them) are used to rank the routes in the dataset and justify their choice with a small comment by using a hit-app in some embodiments. In some embodiments, these judgements are used as ground truth for evaluation and/or training. The hit app has displayed the same information as the desktop application and the routes inside each query have been randomly sorted (i.e., other than in the desktop application where per default the routes are sorted by travel time). A correlation analysis between the route ranking order in the logged signals and the judgement showed a very low correlation coefficient of 0.06, which confirms in a way the noisiness of the click data. Some embodiments additionally or alternatively collect ground truth data based on there being a turn-by-turn navigation system - observing whether users/drivers follow the first/recommended option or chose the second/third option from the navigation system.

For each query, the ground truth collected via aforementioned hit-app is compared with the ranking order of a typical fastest-route-first (FRF) approach and the output of a lightGBM ranker. One of the most striking results to emerge from the data is that the judgements were only 16% consistent with the ranking order of the default FRF. The judges often went for the second fastest choice, especially when the travel time was not significantly longer and the default top route showed one or more traffic warning. Traffic warnings seem to have a significant impact and often outshine the travel time when it comes to the final decision for a specific route. Moreover, the judges' comments underpin how much local driver knowledge and past experience can affect their top choice. Aspects of the L2/L3 ranker, on the other hand, were able to match 51% of the queries and was therefore 3 times more accurate than the FRF-based desktop application. This underpins the fact that a relevance-based approach as described herein can clearly help boost significantly the quality of current routing systems.

FIG. 3 is a schematic diagram illustrating how route documents are generated, according to some embodiments. In some embodiments, FIG. 3 illustrates how the L1 retriever 230 of FIG. 2 and/or the retrieval module 122 of FIG. 1 operate. FIG. 3 includes a digital map 308 that includes a source location 302, a destination location 306, and a route 304 between the source location 302 and the destination location 306. The route 304 includes a plurality of route segments (e.g., individual roads), such as route segment 304-1, which define the route 304. As described in more detail below, various embodiments generate, for each route segment, a data object, such as 305, which includes metadata or other annotations that describe various attributes of the corresponding route segment (e.g., 304-1). Each data object is stitched together to form a route document 311, as described in more detail below.

Routes, and especially driving routes, are more than a simple sequence of location points starting from an origin location A 302 to a destination location B 306 projected on a road network that differ with each other solely spatially. Each route (or route document 311) comes with route properties 310, which are set of attributes that can be either of geometrical or of semantic nature. Geometric properties refer to the overall length of the route, to elevation changes, as well as to the route's shape, simplicity and/or smoothness (e.g., a twisty route). Semantic properties on the other hand can refer to the type of the traversed road segments (e.g., highway, arterial, street), their name (e.g., "Geary Boulevard", "I-101", "A-5"), and the type and name of locations and neighborhoods along the route, to name but a few. Moreover, semantic attributes can be more generic and personal like scenic, historic, lonely, and adventurous.

Whenever an API call is made to a routing service, in some embodiments the routing engine (e.g., the routing component 220) in the backend triggers a path search algorithm that utilizes a variety of road network and traffic data to compute a group of features for each candidate route. This helps the routing engine to find an optimal set of paths based on certain given or predefined criteria. This group of features in some embodiments is then held temporarily in memory in a nested JSON-like structure and describes each alternate route candidate at two different levels, namely at route level and at route segment level. Route level descriptions include general route properties 310 like total distance and estimated time of arrival (ETA) as well as the route's itinerary, which includes information about the route at maneuver level, including the type of maneuvers, the heading direction, and the name and type of the more significant traversed roads. While the route properties 310 are computed during the path search by aggregating individual road arc properties on the underlying road network, the itinerary information is a combination of road network data (e.g., type of road) and generated route descriptions (e.g., navigation instructions). Part of this data can be found inside the response of a typical routing API.

A "road arc" typically refers to a segment of a road (e.g., 304-1) represented as a geometric entity within a digital map database. In digital map databases, roads are often represented as sequences of connected line segments known as "arcs" or "edges." Each arc represents a portion of a road between two endpoints, such as intersections or bends in the road. Road arcs are associated attributes such as road name, road type (e.g., highway, street), speed limit, directionality, and other metadata. These attributes provide additional information about the characteristics of the road segment. Road arcs/segments are connected topologically to form a network representing the road infrastructure. Nodes (e.g., in a graph data structure) represent intersections or junctions where road arcs meet, and arcs (e.g., or edges in a graph data structure) represent the road segments between these nodes. Road arcs play a role in routing and navigation algorithms used by map services. These algorithms calculate optimal routes between locations by traversing the road network, which is represented by interconnected road arcs.

Route segment level descriptions (i.e., route segment properties 312) refer to data that describe individual route segments, such as 304-1, of the entire route 304. For example, the route segment properties 312 include each data object, such as data object 305, which includes metadata that describes attributes of each route segment along the route 304 in some embodiments. Accordingly, for example, in some embodiments the route 304 includes many more segments than 304-1 and thus many more data objects than 305. A route segment can be a whole route leg at the highest level and a single road arc at the lowest level, i.e., length, road type and road surface type of a single road arc in a road network. In some embodiments, every time a path search algorithm is run, each route candidate is already represented in a semi-textual form and contains many of the required data already in a ready-to-use form.

The textual information per road segment is used in the matching and retrieving process. For each route candidate, the routing engine extracts and stitches the relevant data (e.g., route properties 310, route segment properties 312 (e.g., multiple data objects similar to 305), and/or semantic input 314 together into a final route document before these are featurized and fed to the L2 ranker 232. The text data in the route segments (e.g., 304-1) and the route documents (e.g., 311) goes through the same normalization as the text in the query in some embodiments so that the output from DQU could be used for matching (e.g., via semantic or fuzzy matching), retrieving and ranking. Some of the relevant data are extracted directly from the already aggregated route properties 310 and some, like the road type ratio of the route, are computed on the fly using route segment properties 312 for the purpose of the L2 ranker. In case there is available semantic information that could be extracted from the user query like an 'avoid'-preference, in some embodiments this is added to the route document 311 as a string, which completes its final form.

In some embodiments, such "matching" described above, where words/characters in the route document 311 are matched against a DQU output can be performed in any suitable fashion. For example, the L1 retriever 230 extracts semantic trajectories from a database via a semantic similarity metric in its various forms, such as the Cosine similarity and the Jaccard Index. By using semantic similarity, the L1 retriever 230 is able to return trajectories that share similar semantic properties. A "semantic trajectory" is defined as a trajectory that has been enhanced with annotations and/or one or several complementary segmentations. For example a semantic trajectory is represented by the route document 311, which includes the metadata within the object 305. In some embodiments, the semantic trajectories are treated as documents within the context of Moving Object Database systems (MODB). Various embodiments map a set of keywords to (sub-) trajectories and on a textual distance function applied on an n-gram representation of the mapped keywords for measuring the textual relevance, while a combination of a Quad-Tree Index with a K-Ref Index serves the search and retrieval process. In some embodiments, the L1 retriever 230 employs a trajectory retrieval framework that relies on generating and indexing a corpus of taxi trip documents to ultimately enable taxi trip- and trajectory-relevant queries by using a common text search engine (e.g., Apache Lucene).

In some embodiments, the L1 retriever 230 uses trajectory vectors, such location2vec. The main idea behind location2vec is to first build words out of route segments (e.g., 340-1), and then use them in a sequence to compose trajectory documents (e.g., 311). Once the trajectory documents are prepared, in some embodiments a Skip-gram model is trained to convert each word in them into high-dimensional trajectory vectors. This method enables the application of simple methods like kNN to identify and retrieve similar locations and relevant trajectories from a trajectory corpus. The semantic input 314 refers to 2 types of features - features that describe the route candidates and features in form of additional semantic input that reflect user preferences.

FIG. 4 is a schematic diagram illustrating how route candidates are optimized or ranked, according to some embodiments. FIG. 4 illustrates what the routing component 118 and/or the routing component 220 performs its functionality in some embodiments. Among a set of optimal alternate routes, particular embodiments find the most similar (yet optimal according to, e.g., time and distance) to a preferred query route q. Similar could be defined freely. This, in some instances, requires suitable similarity retrieval metric over suitable representation (e.g., similar hilliness, similar number of blue buildings, etc.).

As illustrated in FIG. 4, although the route 402 is the most optimal route (e.g., is the fastest to traverse from source to destination relative to other routes), the user prefers route 404 (e.g., a route stored to the preferred routes database 218). Accordingly, give these inputs, some embodiments calculate a route 406, which is most similar to the preferred route 404, but yet is more optimal than then preferred route 404 (e.g., takes fewer minutes to travel to).

Describing more formally some embodiments of the Retriever Module 122 and/or L1 Retriever in 230, in some embodiments, one of the first algorithms used to solve the point-to-point shortest path problem is Dijkstra's algorithm to, for example, compute route 402. The algorithm builds iteratively the shortest path starting from the source node and expanding it based on a cost function. The algorithm terminates when the target node is settled. Users often expect direction search to provide them with good and diverse route alternates in addition to the optimal path. To obtain alternative paths with Dijkstra, various embodiments run a bidirectional version of the algorithm, where a forward search is run from the source node and a backward search from the target, and few meeting points between them are then collected. Each meeting point produces a candidate alternative path. The candidate set of alternative paths then goes through a filtering process to guarantee diversity, and optimality. The shortest path and the best candidate alternative paths are returned to the user. One noted characteristic of Dijkstra's algorithm is that the forward and backward searches do not use information about the target and start locations, respectively. As a result the search space can grow significantly.

The larger search space allows bidirectional Dijkstra to find good, diverse alternates. However, it comes at the price of prohibitively high latency. This has motivated a number of improvements, such as algorithms like A*. A* modifies the optimization function, introducing information about the start and target locations in the forward and backward search, respectively. The new information is a heuristic estimate for the remaining path from the current to the end (target in forward and source in backward) node. This estimate typically needs to satisfy admissibility conditions to guarantee solution optimality. It has been shown that A* reduces the search space of Dijkstra's algorithm. The trade-off: A* can easily miss good alternative routes that are different from the main optimal solution, yet could be preferred by users.

A* and hierarchical methods suffer from the same problem - too limited set of candidates to ensure diverse alternates. They also do not have mechanisms to ensure an alternate path which matches users' preferences, if such are explicitly stated. Various embodiments are directed to a simple, yet very effective modification which does not jeopardize the efficiency of the SSSP search.

Both A* and Candidate Route Pruning ("CRP") have persistence mechanisms with small memory footprint. For example, A* similar to Dijkstra keeps a priority queue with the current node candidates, the cost for reaching them and the parent node from which they are reachable. Various embodiments extend this memory slightly with information derived from the properties of the road network (e.g., information about one or few major roads and the major geo entities (cities, postal codes, neighborhoods) on the path to the current candidate nodes, or whether some road segments are labeled as scenic etc. (e.g., data to be stored to the data object 305, the route properties 310, and/or the route segment properties 314 of FIG. 3). The information is normalized and represented in the same way as produced by the DQU component 204 to ensure matching of the specified preferences. As pointed out, on cell level CRP runs Dijkstra, so for it various embodiments keep similar persistence structure.

Various embodiments run a slightly modified version of A*, referred to as a two-step A* algorithm. The main idea behind the algorithm lies in the observation that both Dijkstra and A* perform a lot of computations, finding shortest paths to many nodes, which are being discarded once a solution is identified. Various embodiments make use of these computations.

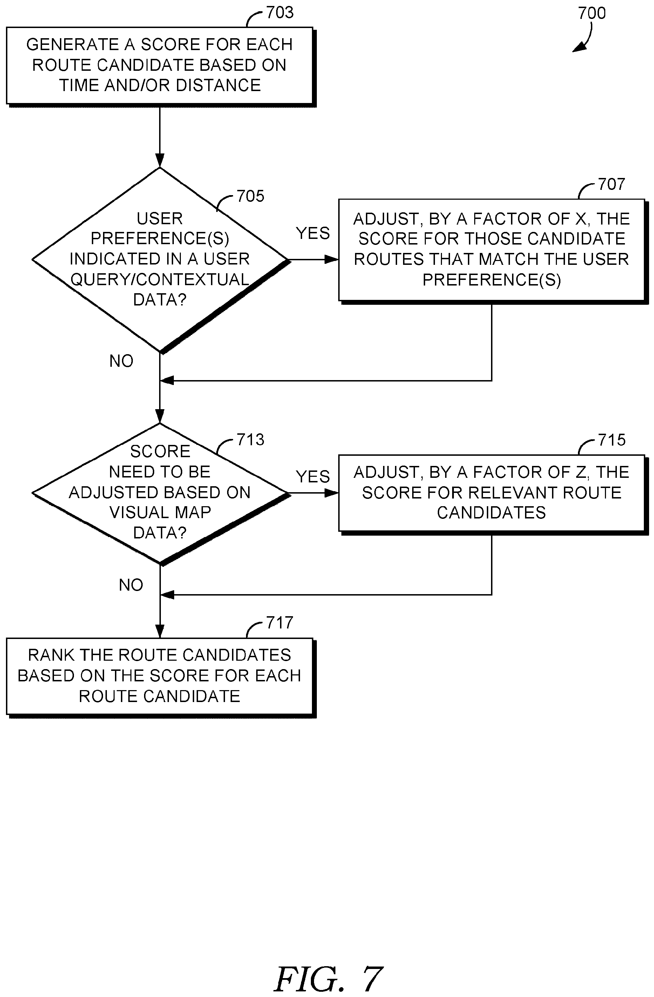

Two-step A* algorithm. Step 1. Various embodiments run standard bidirectional A* search. Once the search identifies its solutions/route candidates, however, various embodiments do not discard the priority queue right away. Various embodiments check the route candidates to determine if they match any specified user preferences (e.g., as described with respect to blocks 705, 707, 709, and/or 711 of FIG. 7). If so, particular embodiments exit - the algorithm has good candidates already which need to be ranked properly by the ranker (e.g., the L2 ranker 232 of FIG. 2). If no suitable route candidates are present in the alternates set, various embodiments run an efficient scan over the candidate nodes in the queue. If some of them match an explicitly specified preference, or if they have a property indicating passing through a major road not covered by the identified in step one solutions, various embodiments keep that route candidate. Various embodiments then prune the remaining nodes. The search is now restarted with the reduced priority queue for some maximum number of iterations. As the step only restarts for a very trimmed down priority queue, it completes the search extremely efficiently. The result is: increased recall in routes matching users' preferences; and additional good and diverse alternates.

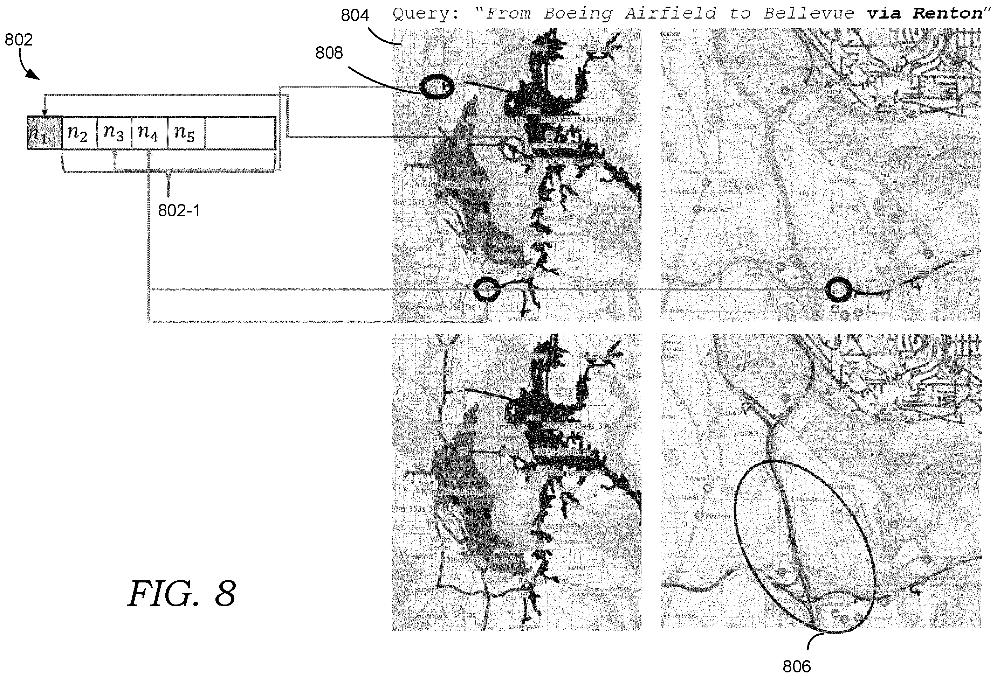

In an illustrative example, and as described in more detail with respect to FIG. 8, a user can issue the query "from Boeing Airfield to Bellevue via Renton." Regular A* returns a single path from source to destination without satisfying the preference "via Renton." The search missed to generate a candidate that would match it (the forward and backward searches are a few steps away from meeting at a path going through Renton). There is also large horizon of both forward and backward search, and many explored nodes that are being discarded by regular A*, but could lead to very good alternates. However, using a two-step A* algorithm for the same query, the introduction of memory information (e.g., information in the data object 305, the route properties 310, and/or the route segment properties 312) and the continuation of the search for a few more iteration guarantees an alternate that matches the query user preference "via Renton." It also produces another good alternate through the north-bound I-520 bridge, again missed by simple A*.

Ranking as a means for retrieving a set of the top-k most relevant trajectories has found its use for some time now in a number of applications, such as in location and trip recommendation systems, in tour planners, and in trajectory visuanalytics. Depending on the scenario, the term relevance can have different meanings. When it comes to locations and trips, the most common relevance definitions refer either to spatial proximity or to semantic similarity or to both.

In the domain of routing, and thus in the context of the present disclosure, the L2 ranker 234 plays essentially two roles, it: Extends the routing component 220 search capabilities of L1 retriever 220 by supporting queries with additional semantic user preferences and constraints. Secondly, the L2 ranker 234 Fine-tunes the output of the routing algorithm of the L1 retriever 230 by balancing between route properties and user preferences.

Accordingly, the definition of relevance is strongly aligned with the expectations of the routing algorithm, namely the returned group of routes needs to be diverse enough, lie within certain route optimality criteria (and ranked accordingly) while being able to support semantic input (e.g., semantic input 314) at the same time. Keeping the group of alternate candidate routes optimal is primarily taken care of by the L1 retriever 230 of FIG. 2. Every time the routing algorithm runs and the L1 retrieval and filtering phase is completed, the resulting alternate routes are set to lie within the desired global and local path search optimality limits and therefore can be safely used as input by the L2 ranker 232. The main objective of the L2 ranker 232 is then to pick the most relevant subset out of these L1 route candidates (e.g., the top-3 routes) and rank them accordingly. The interpretation of route relevance in this work goes beyond finding the shortest or the fastest path between two locations along a road network. Various embodiments consider the optimality of routes in a broader sense, where the choice of a route can be time-dependent, influenced by various external and environmental factors or driven by the user's personality, travel goals and past experiences, a fact that also highlights the need of personalization. For instance, some drivers prefer highways, some go for the shortest distance, some like simpler routes, and others avoid turns as much as possible. The greatest benefit that comes by adding a ranking model on top of a classic routing algorithm is its ability to learn. That is, it adds a dynamic, flexible, data-driven component that is ideally able to capture the latent notion of an optimal route in route choices made by users. In particular, a ranker (e.g., the L2 ranker 232) trained with user-picked route selections can help identify and rank more relevant alternate candidate routes than traditional, rather rigid, cost-based approaches allow.

From each route document that was generated from data retrieved during the L1 phase as described with respect to FIG. 3, various embodiments generate a number of features. Various embodiments (e.g., the semantic input 314) require 2 type of features - features that describe the route candidates and features in form of additional semantic input that reflect user preferences. With regard to route property features (e.g., route properties 310), some embodiments extract the route's length, ETA, complexity, smoothness, the road type ratio, and/or the scenic degree or level to name a few.

With regard to semantic features (e.g., semantic input 314), some embodiments use a Via and an Avoid Boolean and key: value| feature to express the existence and the value of interest/user preference respectively. A second value is used to capture the user's sentiment, e.g., the must in query: "From A to B, must avoid highway I-50". Various embodiments define the route's complexity as the min-max normalized total number of maneuvers contains within each candidate route over the set of the candidate routes. The less maneuvers a candidate route has the less complex this is. The candidate route Smoothness on the other hand considers in addition to the count of maneuvers along the route, also their type, by assigning each type of maneuver (Left-Turn, Right Turn, U-Turn, Straight) a specific weight. Both return a score from 0 to 1 in some embodiments. The road type ratio reflects the coverage of a specific road type along the route compared to its total driven distance. For instance, a 70% highway ratio would mean that 70% of the given route is on the highway. An extension of this feature captures the existence of a particular road elements, like a bridge (i.e., to support "take the bridge" type of queries). The Scenic degree of the route is defined in an analog manner. As before, both features return a score of 0 to 1 in some embodiments.

Various aspects of the present disclosure are meant for production deployment. Therefore, there are a few important prerequisites that need to be satisfied by a learning-to-rank model in some instances. In particular, various embodiments need an efficient, light-weighted model with a fast training speed, low-latency inference phase that is easy to integrate in a .NET environment and preferably with a high interpretability. For these reasons, various embodiments use a LightGBM . LightGBM is a fast, low-memory, accurate, production-proven model that is included in the ML.NET package. Various embodiments keep more or less the hyper-parameter default values, with LambdaRank as objective function, NDCG as loss function and 0.1 as learning rate, but various embodiments reduce the number of trees and leaves to 10 and 12 respectively because of the small size of evaluation datasets.

FIG. 5 is a screenshot 500 of a user interface illustrating how user queries with respect to navigation are executed, according to some embodiments. At a first time, various embodiments receive an indication that the user has issued a first query 502-1 - "Sunnyvale to San Francisco." As part of the same conversation or session 502 and subsequent to the first user query 502-1, particular embodiments receive an indication that the user has issued a second user query "via-280." In some embodiments, the conversation/session 502 is included in the input 202 of FIG. 2. Accordingly, for example, the DQU component 204 augments the query 502-2 with the query 502-1 (and/or augments both queries with additional contextual data) via 206 as illustrated by the augmented query 504, and detects user preferences (e.g., "via 280") as well as other entities via functionality 208 of FIG. 2.

Responsively, the LS component 210 geocodes the detected geo-entities indicated in the DQU output (via 212) and ensures spatial consistency via 216. The routing component 220 then takes, as input, preferred routes of the user (via the database 218), the spatially consistent geocoded entities from the LS component 216, and the user preferences detected from 208 to retrieve and rank route candidates, at least a portion of which is indicated in the ranked results 506 (i.e., a few of the highest ranked route candidates), which indicate the ranking (denoted by numerals 1, 2, and 3). As illustrated in the ranked results 506, although the search result denoted by "1" is a highest ranked search result, the distance between the source location 520 and destination location 522 (i.e., 77.886 miles) and time of travel (i.e., 0:49:35; from source 520 to destination 522) are higher compared to the second best ranked search result denoted by "2." Search result 2, for example, has a distance of just 65.926 and a travel time of 0:43:41, both of which are a smaller distance and less time. Existing map service optimization engines would typically rank such entry as the highest ranked entry. However, because the user expressed a user preference of "via I-280" in the query 502-2, route 512 (corresponding to route 1 in the ranked results 506) is ranked the highest because the route 512 incorporates I-280, while none of the other routes do.

Responsive to retrieving and ranking such route candidates, various embodiments (e.g., the presentation component 120) causes presentation of the ranked results 506. Various embodiments additionally cause visual presentation of the corresponding routes 510, 512, and 514 over a map interface 508, where each route 510, 512, and 514 is represented by visual indicia (e.g., specific colors) that has been superimposed over the map interface 508. In other words, the visual routes 510, 512, and 514 are visual representation of a calculated route overlaid on the map interface 508. The superimposed routes 510, 512, and 514 are thus visually depicted as a line or series of lines overlaid on the map interface 508, connecting the start point/source location 520 and end points/destination location 522 of the journey. The line typically follows the path of the calculated route and includes directional arrows or symbols to indicate the direction of travel.

Additionally, various embodiments cause presentation of the summary 530 (either by audio and/or text) - "This route takes you from Sunnyvale to San Francisco via I-280, a scenic freeway that runs along the foothills of the Santa Cruz Mountains. You will pass by Cupertino, Los Altos, Palo Alto, and San Mateo before joining US-101 near the San Francisco International Airport. This route meets your preference of using I-280, but it is slightly longer and slower than the other routes." As described herein, such as with respect to the query response generator 128, in some embodiments such summary 530 is generated by a language model, such as an LLM, which has generative text summary capabilities and can extract information from contextual data, the conversation/session 502, the road network & traffic data database 222, the preferred routes 218 (or any user preference), results from the LS component 210, the routing component 220, and/or the output of the DQU component 204 in order to formulate the summary 530.

In response to receiving an indication that a graphical element 541 (e.g., a mouse pointer) has hovered over a portion of the route 514 as illustrated in FIG. 5, various embodiments cause presentation of the tooltip user interface element 540, which reads "this route has lower traffic congestion level, but has more maneuvers (turns)." In some embodiments, similar tooltips are displayed in relation to the routes 510 and 512 such that unique properties specific to the corresponding route are displayed in the respective tooltip.

Additionally, or alternatively, some embodiments cause presentation of step-by-step directions/instructions at the screenshot 500. That is, for example, a top-ranked superimposed route is accompanied by turn-by-turn directions displayed either on the map interface 508 or in a separate panel. These directions provide step-by-step instructions for navigating the route, including details about upcoming turns, intersections, and landmarks.

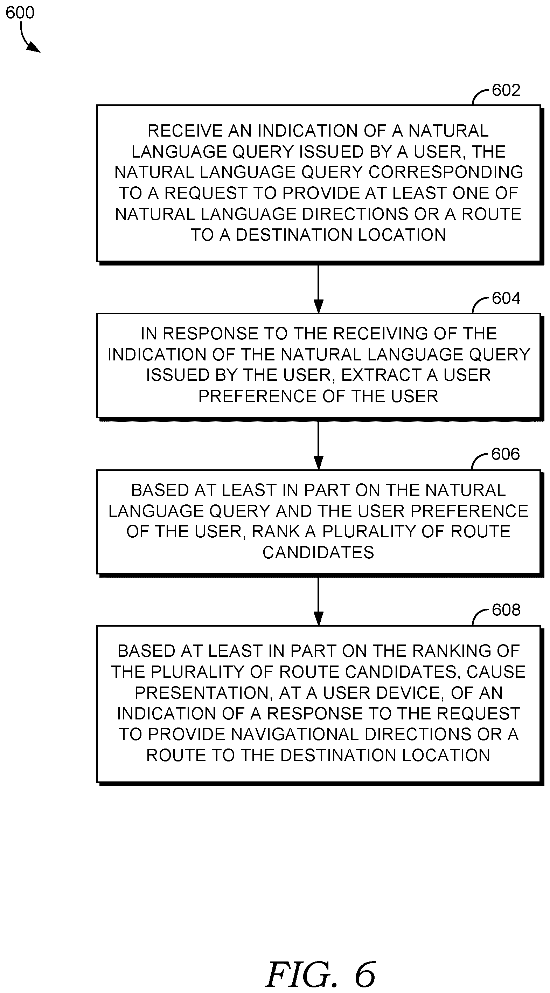

FIG. 6 is a flow diagram of an example process 600 for executing a user request to provide navigational directions and/or a route to a destination location, according to some embodiments. The process 600 (and/or any of the functionalities described herein) is performed by processing logic that comprises hardware (for example, circuitry, dedicated logic, programmable logic, microcode, and the like), software (for example, instructions run on a processor to perform hardware simulation), firmware, or a combination thereof. Although particular blocks described in this disclosure are referenced in a particular order at a particular quantity, it is understood that any block can occur substantially parallel with or before or after any other block. Further, more (or fewer) blocks can exist than illustrated. Added blocks can include blocks that embody any functionality described herein (for example, as described with respect to FIGS. 1-5). In another example, block 604 need not occur in the process 600. The computer-implemented method, the system (that includes at least one processor and at least one computer readable storage medium), and/or the computer readable medium as described herein can perform or be caused to perform the process 600 or any other functionality described herein.

Per block 602, some embodiments first receive an indication of a natural language query (e.g., a question or command) corresponding to a request to provide at least one of natural language directions (e.g., turn-by-turn instructions indicating which roads to turn on to travel to a destination) or a route to a destination location. In some embodiments, such "indication" is the natural language query itself. In other embodiments, the indication is a numerical or other representation of the natural language question or command, such as an input embedding (numerical representation) of the natural language query. Additionally, or alternatively, the "indication" can be any natural language utterance or characters that are not necessarily or directly a command or question. For example, at a first time a user can say, "Give me directions to location A." A language model then generates a response to such command with "in what city would you like to travel to in order to reach location A?" The user can then responsively say, "City B." While "City B" itself is not directly a command or question, it is an "indication" of such question or command because of the user's prior command - i.e., "give me directions to location A." In another example, the "indication" is additionally or alternatively an auditory utterance translated, via speech-to-text, natural language text into sound.

Any of the DQU component 204, LS component 210, and/or the routing component 220 receives such "indication" of the natural language query. For example, the DQU component 204 receives the actual natural language query included in the input 202. The LS component 210 receives the "indication" of the natural language query by receiving the DQU output (e.g., augmented query with detected entities) in some instances. And the routing component 220 receives an "indication" of the query by receiving the spatially consistent geo-coded entities (from the LS component 210) indicated in the user query of input 202 in some instances.

Per block 604, in response to the receiving of the indication of the natural language query issued by the user, some embodiments extract a user preference of the user. In some embodiments, block 604 includes the functionality described with respect to the entity and preference recognition 208 of FIG. 2, the entity and user preference detector 108 of FIG. 1, preferred routes extracted from the preferred routes database 218, and/or data of the user extracted by the contextual data extractor 102 of FIG. 1.

In an illustrative example of block 604, in some embodiments the user preference (e.g., "via I-280") is included in the natural language query, where the user preference is a preference other than the destination location, intermediate location, a source location, and/or not a selected filter on a user interface (i.e., the user preference is not any of these stated locations or a part of a selected filter). For example, the user preference is a specific road or type of road to use in the route that the user types as part of their query. Continuing with this example, some embodiments provide, as input, the indication of the natural language query as input into a language model (e.g., an LLM), where the language model detects an entity associated with the destination location (e.g., a geolocation entity specifying source location, intermediate location, and/or destination location) and the user preference (e.g., detects that "via I-280" refers to a road by tagging this phrase with a "road" tag), as described, for example, with respect to 208 of FIG. 2.

The invention additionally involves extracting contextual data (e.g., as described with respect to the contextual data extractor 102 of FIG. 1) as part of block 604. Such contextual data includes at least one of, information from one or more previous turns that are part of a same first conversation as the natural language query, one or more previous natural language queries generated prior to the natural language query that are a part of a second conversation, a spatial constraint within the natural language query, a temporal constraint within the natural language query or context from an output generated by a language model.

Responsively, the invention as part of block 604 then generates an augmented query by augmenting the natural language query with at least a portion of the contextual data. Then the invention provides the augmented query as input into a language model, where the language model detects, within the augmented query, the user preference. Examples of this are described with respect to the functionality 208 of FIG. 2, where the LLM performs entity and preference recognition by taking the augmented query from 206 as input.

Extracting user preferences can occur in any suitable manner in block 604. For example, some embodiments extract the user preference based on performing natural language processing (e.g., via NER) of the natural language query itself. Some embodiments additionally or alternatively perform natural language processing of first text that is part of a current conversation as the natural language query. For example, some embodiments perform NER on a prior query that is part of the DQU output of the DQU component 204. Additionally, or alternatively, some embodiments perform natural language processing of second text that is part of a conversation prior to the current conversation. For example, prior to the conversation 502, the same user has stated their preference for "non-two-lane highways" for safety purposes. Additionally, or alternatively some embodiments extract user preference from a data store (e.g., the preferred routes databases 218 or storage 105) that does not include the natural language question or command.

Per block 606, based at least in part on the natural language query and the user preference of the user, some embodiments then rank a plurality of route candidates. In some embodiments, block 606 includes the functionality as described with respect to the routing component 220 of FIG. 2, and/or the routing component 118 of FIG. 1. In some embodiments, instead of directly ranking candidates, some embodiments alternatively instruct a routing component to rank the plurality of route candidates (e.g., based at least in part on a language model detecting an entity associated with the destination location and the user preference). For example, instead of block 606 being performed by the routing component 220, the LS component 210 alternatively performs block 606 by "instructing" the routing component 220 to rank the route candidates or otherwise transmit a signal to the routing component 220 that causes the routing component 220 to perform its functionality by receiving the DQU output from the DQU component 204.

In some embodiments, however, the routing component 220 indeed performs block 606. For example, based at least in part on a language model having detected an entity (e.g., the LLM of 208 detecting entities) associated with the destination location or contextual data (e.g., extracted by the contextual data extractor 102), the routing component 220 ranks the plurality of route candidates, as described with respect to the routing component 220.

As described above, the invention extracts contextual data (e.g., the contextual data extracted by the contextual data extractor 102) such that the ranking of the plurality of route candidates is further based on the contextual data. For example, in a prior conversation a model has generated a clarifying question or other output such as, "so you are saying you prefer smooth roads, correct?" And the user has responded with, "yes." Both of these statements are included in the ranking algorithm of the ranking component such that the ranking component ranks routes without smoother roads higher than other routes in some instances.

In some embodiments, the request to provide navigational directions or the route to the destination location (at block 602) includes a request to provide navigational directions or route from a source location to the destination location using a first street or location (e.g., "via I-280", or "via Renton"), as described for example, with respect to the second user query 502-2. In some embodiments, the request to provide navigational directions or the route to the destination location alternatively or additionally includes a request to provide navigational directions or route from a source location to the destination location by avoiding the first street or location. In an illustrative example of these concepts combined, the user query can be "take me from A to B via I-280 and I-101, avoiding I-880 and Fremont." Some embodiments then compute a distance from the source location to the first street, and from the source location to the destination location, such that the ranking of the plurality of route candidates is further based on the computing of the distance. Examples of this are described with respect to the spatial consistency module 216 (and block 606 includes 216 functionality in some embodiments), where geocoded entities (e.g., in which there are duplicate locations) can be determined based on their distances to the source location, intermediate location, and/or destination locations.

In some embodiments, the "ranking" at block 606 includes tagging, with metadata, each data object (e.g., a JSON file, a container, a programming class, or a key-value data structure (e.g., a hash map)) representing a road segment of each route candidate, of the plurality of route candidates. For example, each data object represents a data object similar to data object 305 of FIG. 3 in some embodiments. For each route candidate, of the plurality of route candidates, some embodiments then generate a route document (e.g., the route document 311) by stitching each data object of a respective road segment together. In this way, the ranking includes ranking each route document based at least in part on a matching of natural language words in each route document to user intent associated with the question or command. Such "matching," for example includes syntactic word matching (e.g., via TF-IDF or fuzzy matching) between each route document and a data set that indicates the user intent - an augmented query, contextual data, and/or tagged entities (e.g., the DQU output of the DQU component 204 of FIG. 2). In some embodiments, such "matching" additionally or alternatively includes "semantic" matching. Semantic matching involves understanding the meaning or semantics of the input data (the route documents and user intent documents) and comparing them based on their semantic relevance. It goes beyond syntactic similarity (as in fuzzy matching) to consider the underlying meanings, concepts, or contexts associated with the data being compared. Semantic matching often involves techniques such as natural language processing (NLP), ontologies, or knowledge graphs to extract and represent the semantic information. The goal of semantic matching is to determine the semantic relatedness or similarity between data elements based on their meanings (not just mere string matching). The matching involves any of the techniques described herein to compare the similarity to two data sets, such as Jaccard Index, KNN, or vectorizing the two datasets into numerical representations and computing a distance (e.g., Euclidian distance) between the two datasets, or other known matching algorithms.

In some embodiments each route document includes one or more of, an overall length of a respective route candidate (from a source location to a destination location), elevation changes for the respective route candidate, a shape of the route candidate, a smoothness level of the respective route candidate, each type of road segment indicated within the respective route candidate, a type and name of locations along the respective candidate routes. The "shape" of a route refers to the geometric path or trajectory followed by a traveler between the starting point and the destination. This shape is typically represented as a series of connected line segments or curves overlaid on a map, visually depicting the route's spatial course. The shape of a route can vary in complexity depending on factors such as the mode of transportation, road network topology, terrain, and user preferences. For example, a route in an urban area with many intersections and turns can have a more intricate shape compared to a route on a highway with fewer deviations. The shape of a route can exhibit curvature and directionality corresponding to the road network's layout and the specific turns and bends encountered along the journey. This curvature is represented by the line segments or curves connecting consecutive waypoints.

A "smoothness level" in the context of routes typically refers to the quality of the road surface or the ease of travel along a particular route. A highway route, for example, is described as having a high smoothness level, indicating that the road surface is typically well-maintained, paved, and designed for high-speed travel. Highways often offer a smooth and uninterrupted driving experience with minimal bumps or obstacles. Routes through urban areas vary in smoothness level depending on factors such as traffic congestion, road condition, and infrastructure maintenance. Some urban roads are smooth and well-paved, providing a comfortable driving experience, while others have potholes, uneven surfaces, or frequent stops due to traffic signals or intersections. Country roads or rural routes, on the other hand, have a moderate smoothness level, as they often traverse diverse terrain and is subject to less frequent maintenance compared to urban highways. While some country roads offer a smooth driving surface, others are unpaved or rough, especially in remote or mountainous areas. Scenic routes are often chosen for their picturesque landscapes and natural beauty rather than their smoothness level. These routes include winding roads, elevation changes, and uneven surfaces to accommodate the natural terrain, providing a more adventurous driving experience.

A "type" of road segment indicated within a route candidate refers to any particular category associated with the road segment, such as "highway," "dirt road," "two-lane road," "4-lane road," "scenic route," "historic routes," "safe routes," routes with EV charging stations coverage, or the like. A type and name of locations along a route includes, for example names of businesses, as well as types of locations, such as "retailer," "gas station," "neighborhood," or the like.

Continuing with FIG. 6, per block 608, based at least in part on the ranking of the plurality of route candidates, some embodiments cause presentation, at a user device, of an indication of a response to the request to provide navigational directions or a route to the destination location. In some embodiments, such "indication" of block 608 includes a graphical element superimposed over a map interface that highlights at least one route candidate, of the plurality of candidates. For example, such indication includes the route 512 as illustrated in FIG. 5. In some embodiments, such "indication" at block 608 additionally or alternatively includes a language model-generated natural language summary of the user preference or at least one road associated with a respective route candidate, of the plurality of route candidates. For example, such indication includes the summary 530 as illustrated in FIG. 5. In some embodiments, such "indication" at block 608 additionally or alternatively includes a tooltip user interface element that highlights a property of at least one respective route candidate, of the plurality of route candidates. For example, such indication includes the tooltip 540 as illustrated in FIG. 5.

FIG. 7 is a flow diagram of an example process 700 of ranking route candidates, according to some embodiments. In some embodiment, the process 700 is performed by the routing component 118 and/or the routing component 220 of FIG. 2. In some embodiments, the process 700 represents or includes the functionality as described with respect to FIG. 3 and FIG. 4. Per block 703, some embodiments generate a score for each route candidate based on time and/or distance (e.g., via a standard bidirectional A* search, as described with respect to FIG. 4). For example, the road network in some embodiments is represented as a graph, where intersections are nodes and roads are edges. Each edge has associated attributes such as distance, speed limit, and current traffic conditions. Various embodiments collect real-time data from various sources such as GPS devices, traffic sensors, historical traffic patterns, and user reports to assess current traffic conditions. In some embodiments, each edge in the graph is assigned a cost based on factors like distance, speed limit, and estimated travel time considering current traffic conditions. A routing algorithm, which could be an enhanced version of Dijkstra's algorithm and/or another algorithm like A* (A-star), is used to find the shortest or fastest path from the origin to the destination. This algorithm iteratively explores neighboring nodes, considering the total cost to reach each node. The routing algorithm takes into account real-time traffic conditions, adjusting the cost of each edge accordingly in some embodiments. This allows the algorithm to dynamically update routes based on congestion levels. In some embodiments, such cost is indicative of the score for each route candidate. In an illustrative example, for three route candidates, a first route candidate is scored highest - .5 - since it is the shortest distance and/or takes the shortest amount of time to travel to from source to destination. A second route candidate is scored .3, and a third route candidate is scored lowest - .1 - since it takes relatively longer.

Per block 705, some embodiments determine whether there are one or more user preferences indicated in a user query and/or other contextual data. In an illustrative example of a user preference in a query, as described with respect to FIG. 2, the LLM or other language model in 208 determines whether are any user preferences indicated in the direction query of input 202 (e.g., by detecting user preferences in the query 502-2 of FIG. 2). In another example of a user preference in contextual metadata, As described herein, the contextual data is data in the same conversation as the user query, conversations prior to the user query, predetermined user preferences stored to a database, such as 105, preferred routes in 218, and/or the like.

Per block 707, if there are user preference(s) detected, some embodiments adjust, by a factor of X (e.g., a weighted float), the score for those candidate routes that match the first user preference(s). For example, as described with respect to the L1 retriever 230, block 606 of FIG. 6, and FIG. 3, some embodiments match (e.g., via fuzzy matching, TF-IDF, etc.) the first user preference, such as "I-280" to the same word "I-280" that is found in a particular route document. Then particular embodiments increment the feature value for a matched "via" preference and through it the relevance score of the route. For example, using the illustration above, the second route candidate, as represented by a particular route document, may have been the only route that contained a match between terms and so is incremented/summed by a float, such as 1.5 (e.g., the X factor) so the new score is 1.8 (1.5 +.3), where the other route candidate scores remain the same. In some embodiments, each route document is weighted by the factor of X for each match in user preference (of the first user preference(s) and/or second user preference(s) indicated 709). This takes into account the quantity of user preferences indicated, where some route candidates can contain a user preference but not all user preferences. In another example of block 707, the user may have registered that they like to take "scenic" routes at a time prior to the user query. However, only a first route document corresponding to the first route candidate may have a word "scenic" in its metadata. Accordingly, various embodiments increment the first route candidate score of .5 by adding .6 to get a total score of 1.1.

Per block 713, some embodiments determine whether the score needs to be adjusted based on visual map data. Examples of this are described with respect to the L3-re-ranker 234 of FIG. 2. For example, some embodiments incorporate a machine learning model where input-output pairs are learned, and where the input is indicative of a query and where the output is indicative of routes illustrated on a map. In this way, the model learns the relationships and associations between user query and route on a map. For example, for the query "around the lake," the model learns that this refers to a particular visual indication on a map, where a route includes roads that are just outside of the lake. Per block 715, if yes at block 713, particular embodiments adjust the score for relevant route candidates.

Per block 717, some embodiments rank the route candidates based on the score for each route candidate. For example, using the illustration above, the final score for the second route candidate is 1.8 (based on a match of first user preference(s) at block 707) the final score for the first route candidate is 1.1 (based on a match in second user preference(s) at block 711), and the final score for the third route candidate is .1 (based only on optimization per block 703; no match in user preferences). Accordingly, various embodiments rank the second route candidate the highest since the score is the highest. The first route candidate is ranked second highest since the score is in the middle. And the third route candidate is ranked last since the score is the lowest. In some embodiments, such ranking is directly represented at a user interface according to its positional orientation (e.g., highest ranked route candidate is top-most query result), as illustrated, for example, in the ranked results 506 of FIG. 5.

FIG. 8 is a schematic diagram illustrating how an L1 Retriever (e.g., the L1 retriever 230 of FIG. 2) functions to compute route candidates responsive to a query, according to some embodiments. FIG. 8 includes a query: "From Boeing Airfield to Bellevue via Renton," as well as an A-star (A*) backwards pass priority queue 802 (referred to as a "priority queue"), and a set of maps 804. The priority queue 802 includes a plurality of nodes *n₁ n₂, n₃, n₄,* and *n₅,* each of which represents a respective route candidate.

Standard A* finds a solution through node *n*₁ of the priority queue 802 then terminates the search discarding the rest of the nodes in the priority queue 802 (i.e., *n₂, n₃, n₄, and n₅,* represented as 802-1. That is, 802-1 represents the discarded part of the priority queue 802 in standard A* or Dijkstra. Various embodiments make use of the discarded part reevaluating for nodes that can lead to solution for user preferences and other alternates. In various embodiments, the L1 Retriever reexamines the route candidates in the priority queue 802 and is able to find that one of them (*n*_4) carries information that it goes through Renton and hence matches the user preference "via Renton". It is extended to a route solution 806 (area marked by the oval). Similarly another alternate is produced as n_3is identified to go through a major freeway I-520, indicated by 808.

As described herein, various embodiments engage in a Two-step A* algorithm. For Step 1, particular embodiments run standard bidirectional A* search. Once the search identifies its solutions, however, various embodiments do not discard any nodes/candidate routes in the priority queue 802 right away. Various embodiments check the route candidates /nodes to determine if they match any specified user preferences. If so, particular embodiments exit - the algorithm has good candidates already which need to be ranked properly by the ranker. Per step 2, if no suitable route candidates are present in the alternates set, some embodiments run an efficient scan over the candidate nodes in the priority queue 802. If some of them match an explicitly specified preference, or if they have a property indicating passing through a major road not covered by the identified in step one solutions, that candidate is kept in the priority queue 802. Various embodiments then prune the remaining nodes/route candidates. The search is now restarted with the reduced priority queue 802 for some maximum number of iterations. As the step only restarts for a very trimmed down priority queue 802, it completes the search extremely efficiently. The result is: increased recall in routes matching users' preferences and additional good and diverse alternates.

### EXAMPLE COMPUTING ARCHITECTURE AND DEVICE

Turning now to FIG. 9, a block diagram is provided showing an example operating environment 10 in which some embodiments of the present disclosure is employed. It should be understood that this and other arrangements described herein are set forth only as examples. Other arrangements and elements (for example, machines, interfaces, functions, orders, and groupings of functions) can be used in addition to or instead of those shown, and some elements are omitted altogether for the sake of clarity. Further, many of the elements described herein are functional entities that are implemented as discrete or distributed components or in conjunction with other components, and in any suitable combination and location. Various functions described herein as being performed by an entity that is carried out by hardware, firmware, and/or software. For instance, some functions are carried out by a processor executing instructions stored in memory.

Among other components not shown, example operating environment 10 includes a number of user devices, such as user devices 02a and 02b through 02n; a number of data sources (for example, databases or other data stores, such as 105), such as data sources 04a and 04b through 04n; server 06; sensors 03a and 07; and network(s) 110. It should be understood that environment 10 shown in FIG. 9 is an example of one suitable operating environment. Each of the components shown in FIG. 9 are implemented via any type of computing device, such as computing device 11 as described in connection to FIG. 10, for example. These components communicate with each other via network(s) 110, which includes, without limitation, a local area network (LAN) and/or a wide area networks (WAN). In some implementations, network(s) 110 comprises the Internet and/or a cellular network, amongst any of a variety of possible public and/or private networks.

It should be understood that any number of user devices, servers, and data sources are employed within operating environment 10 within the scope of the present disclosure. Each comprises a single device or multiple devices cooperating in a distributed environment. For instance, server 06 is provided via multiple devices arranged in a distributed environment that collectively provide the functionality described herein. Additionally, other components not shown are also included within the distributed environment, in some embodiments.

User devices 02a and 02b through 02n can be client devices on the client-side of operating environment 10, while server 06 can be on the server-side of operating environment 10. Server 06 can comprise server-side software designed to work in conjunction with client-side software on user devices 02a and 02b through 02n so as to implement any combination of the features and functionalities discussed in the present disclosure. This division of operating environment 10 is provided to illustrate one example of a suitable environment, and there is no requirement for each implementation that any combination of server 06 and user devices 02a and 02b through 02n remain as separate entities. In some embodiments, the one or more servers 06 represent one or more nodes in a cloud computing environment. Consistent with various embodiments, a cloud computing environment includes a network-based, distributed data processing system that provides one or more cloud computing services. Further, a cloud computing environment can include many computers, hundreds or thousands of them or more, disposed within one or more data centers and configured to share resources over the one or more network(s) 110.

In some embodiments, a user device 02a or server 06 alternatively or additionally comprises one or more web servers and/or application servers to facilitate delivering web or online content to browsers installed on a user device 02b. Often the content can include static content and dynamic content. When a client application, such as a web browser, requests a website or web application via a URL or search term, the browser typically contacts a web server to request static content or the basic components of a website or web application (for example, HTML pages, image files, video files, and the like). Application servers typically deliver any dynamic portions of web applications or business logic portions of web applications. Business logic can be described as functionality that manages communication between a user device and a data store (for example, a database). Such functionality can include business rules or workflows (for example, code that indicates conditional if/then statements, while statements, and the like to denote an order of processes).

User devices 02a and 02b through 02n comprises any type of computing device capable of use by a user. For example, in one embodiment, user devices 02a through 02n is the type of computing device described in relation to FIG. 10 herein. By way of example and not limitation, a user device is embodied as a personal computer (PC), a laptop computer, a mobile phone or mobile device, a smartphone, a tablet computer, a smart watch, a wearable computer, a personal digital assistant (PDA), a music player or an MP3 player, a global positioning system (GPS) or device, a video player, a handheld communications device, a gaming device or system, an entertainment system, a vehicle computer system, an embedded system controller, a camera, a remote control, a bar code scanner, a computerized measuring device, an appliance, a consumer electronic device, a workstation, or any combination of these delineated devices, or any other suitable computer device.

Data sources 04a and 04b through 04n comprises data sources and/or data systems, which are configured to make data available to any of the various constituents of operating environment 10 or system 100 described in connection to FIG. 1. Examples of data source(s) 04a through 04n is one or more of a database, a file, data structure, corpus, or other data store. Data sources 04a and 04b through 04n are discrete from user devices 02a and 02b through 02n and server 06 or is incorporated and/or integrated into at least one of those components in some embodiments. In one embodiment, data sources 04a through 04n comprise sensors (such as sensors 03a and 07), which is integrated into or associated with the user device(s) 02a, 02b, or 02n or server 06 in some embodiments.

In some embodiments, operating environment 10 is utilized to implement one or more of the components of the system 100, described in FIG. 1, including components for assigning one or more datasets to one or more clusters, as described herein. Operating environment 10 also can be utilized for implementing aspects of processes 600 and 700 and/or any other functionality as described in connection with FIGS. 1-9.

Having described various implementations, an exemplary computing environment suitable for implementing embodiments of the disclosure is now described. With reference to FIG. 10, an exemplary computing device is provided and referred to generally as computing device 11. The computing device 11 is but one example of a suitable computing environment and is not intended to suggest any limitation as to the scope of use or functionality of embodiments of the disclosure. Neither should the computing device 11 be interpreted as having any dependency or requirement relating to any one or combination of components illustrated.

Turning to FIG. 10, computing device 11 includes a bus 19 that directly or indirectly couples the following devices: memory 12, one or more processors 14, one or more presentation components 16, one or more input/output (I/O) ports 18, one or more I/O components 20, an illustrative power supply 22, and a hardware accelerator 26. Bus 19 represents what can be one or more busses (such as an address bus, data bus, or combination thereof). Although the various blocks of FIG. 10 are shown with lines for the sake of clarity, in reality, these blocks represent logical, not necessarily actual, components. For example, one can consider a presentation component such as a display device to be an I/O component. Also, processors have memory. The inventors hereof recognize that such is the nature of the art and reiterate that the diagram of FIG. 10 is merely illustrative of an exemplary computing device that can be used in connection with one or more embodiments of the present disclosure. Distinction is not made between such categories as "workstation," "server," "laptop," "handheld device," or other computing device, as all are contemplated within the scope of FIG. 10 and with reference to "computing device."

Computing device 11 typically includes a variety of computer-readable media. Computer-readable media can be any available media that can be accessed by computing device 11 and includes both volatile and nonvolatile media, removable and non-removable media. By way of example, and not limitation, computer-readable media comprises computer storage media and communication media. Computer storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 11. Computer storage media does not comprise signals per se. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 12 includes computer storage media in the form of volatile and/or nonvolatile memory. The memory is removable, non-removable, or a combination thereof. Exemplary hardware devices include solid-state memory, hard drives, optical-disc drives, or other hardware. Computing device 11 includes one or more processors 14 that read data from various entities such as memory 12 or I/O components 20. Presentation component(s) 16 presents data indications to a user or other device. Exemplary presentation components include a display device, speaker, printing component, vibrating component, and the like.

The I/O ports 18 allow computing device 11 to be logically coupled to other devices, including I/O components 20, some of which are built-in, in some instances. Illustrative components include a microphone, joystick, game pad, satellite dish, scanner, printer, wireless device, and the like. The I/O components 20 provide a natural user interface (NUI) that processes air gestures, voice, or other physiological inputs generated by a user in some embodiments. In some instances, inputs are transmitted to an appropriate network element for further processing. An NUI can implement any combination of speech recognition, touch and stylus recognition, facial recognition, biometric recognition, gesture recognition both on screen and adjacent to the screen, air gestures, head and eye tracking, and touch recognition associated with displays on the computing device 11. The computing device 11 can be equipped with depth cameras, such as stereoscopic camera systems, infrared camera systems, RGB camera systems, and combinations of these, for gesture detection and recognition. Additionally, the computing device 11 can be equipped with accelerometers or gyroscopes that enable detection of motion. The output of the accelerometers or gyroscopes can be provided to the display of the computing device 11 to render immersive augmented reality or virtual reality.

Some embodiments of computing device 11 include one or more radio(s) 24 (or similar wireless communication components). The radio 24 transmits and receives radio or wireless communications. The computing device 11 can be a wireless terminal adapted to receive communications and media over various wireless networks. Computing device 11 can communicate via wireless protocols, such as code division multiple access ("CDMA"), global system for mobiles ("GSM"), or time division multiple access ("TDMA"), as well as others, to communicate with other devices. The radio communications can be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection can include, by way of example and not limitation, a Wi-Fi^{®} connection to a device (for example, mobile hotspot) that provides access to a wireless communications network, such as a WLAN connection using the 802.11 protocol, a Bluetooth connection to another computing device is a second example of a short-range connection, or a near-field communication connection. A long-range connection can include a connection using, by way of example and not limitation, one or more of CDMA, GPRS, GSM, TDMA, and 802.16 protocols.

Hardware accelerator 26 represents any suitable hardware component (e.g., GPU) that offloads one or more tasks (e.g., from a CPU) to accelerate or speed up the task. In some embodiments, the hardware accelerator 26 represents a Graphics Processing Unit (GPU), field programmable gate arrays (FPGA), application-specific integrated circuits (ASIC), a Tensor Processing Unit (TPU), a sound card, or any suitable hardware component..

Having identified various components utilized herein, it should be understood that any number of components and arrangements can be employed to achieve the desired functionality within the scope of the present disclosure. For example, the components in the embodiments depicted in the figures are shown with lines for the sake of conceptual clarity. Other arrangements of these and other components can also be implemented. For example, although some components are depicted as single components, many of the elements described herein can be implemented as discrete or distributed components or in conjunction with other components, and in any suitable combination and location. Some elements can be omitted altogether. Moreover, various functions described herein as being performed by one or more entities is carried out by hardware, firmware, and/or software, as described below. For instance, various functions are carried out by a processor executing instructions stored in memory. As such, other arrangements and elements (for example, machines, interfaces, functions, orders, and groupings of functions, and the like.) can be used in addition to or instead of those shown.

Embodiments of the present disclosure have been described with the intent to be illustrative rather than restrictive. Embodiments described in the paragraphs above can be combined with one or more of the specifically described alternatives. In particular, an embodiment that is claimed can contain a reference, in the alternative, to more than one other embodiment. The embodiment that is claimed can specify a further limitation of the subject matter claimed. Alternative embodiments will become apparent to readers of this disclosure after and because of reading it. Alternative means of implementing the aforementioned can be completed without departing from the scope of the claims below. Certain features and sub-combinations are of utility and can be employed without reference to other features and sub-combinations and are contemplated within the scope of the claims.

As used herein, the term "set" is employed to refer to an ordered (i.e., sequential) or an unordered (i.e., non-sequential) collection of objects (or elements), such as but not limited to data elements (for example, events, clusters of events, and the like). A set includes N elements, where N is any non-negative integer. That is, a set includes 1, 2, 3, N objects and/or elements, where N is a positive integer with no upper bound. Therefore, as used herein, a set can include only a single element. In other embodiments, a set includes a number of elements that is significantly greater than one, two, or three elements. As used herein, the term "subset," is a set that is included in another set. A subset can be, but is not required to be, a proper or strict subset of the other set that the subset is included in. That is, if set B is a subset of set A, then in some embodiments, set B is a proper or strict subset of set A. In other embodiments, set B is a subset of set A, but not a proper or a strict subset of set A.

## Claims

1. A system comprising:
at least one computer processor (14); and
one or more computer storage media (12) storing computer-useable instructions that, when used by the at least one computer processor, cause the at least one computer processor to perform operations comprising:
receiving (602) a natural language question or command issued by a user, the natural language question or command corresponding to a request to provide at least one of navigational directions or a route to a destination location;
in response to the receiving of the natural language question or command issued by the user, extracting (604) a user preference of the user;
based at least in part on the natural language question or command and the user preference of the user, ranking (606) a plurality of route candidates; and
based at least in part on the ranking of the plurality of route candidates, causing (608) presentation, at a map interface of a user device, of an indication of a response to the request to provide navigational directions or a route to the destination location;
wherein the operations further comprise:
extracting contextual data, and wherein the contextual data includes at least one of, information from one or more previous turns that are part of a same first conversation as the natural language question or command, one or more previous natural language questions or commands generated prior to the natural language question or command that are a part of a second conversation, a spatial constraint within the natural language question or command, a temporal constraint within the natural language question or command, or context from an output generated by a language model,
wherein the ranking of the plurality of route candidates is further based on the contextual data;
generating an augmented query by augmenting the natural language question or command with at least a portion of the contextual data; and
providing the augmented query as input into a language model, and wherein the language model detects, within the augmented query, the user preference.

2. The system of claim 1, wherein the user preference includes a preference to navigate to the destination location via a first street or location or avoiding the first street or location.

3. The system of claim 1, wherein one or more of the following is provided:
(i) the extracting the user preference is based on at least one of: performing natural language processing of the natural language question or command, performing natural language processing of first text that is part of a current conversation as the natural language question or command, performing natural language processing of second text that is part of a conversation prior to the current conversation, or extracting the user preference from a data store that does not include the natural language question or command;
(ii) the request to provide at least one of the navigational directions or the route to the destination location includes a request to provide a route navigational directions from a source location to the destination location using or avoiding a first street or location and the operations further comprise:
computing a distance from the source location to the first street, and from the source location to the destination location, and wherein the ranking of the plurality of route candidates is further based on the computing of the distance from the source location to the first street and from the source location to the destination location.

4. The system of claim 1, wherein the operations further comprise:
tagging, with metadata, each data object representing a road segment of each route candidate, of the plurality of route candidates; and
for each route candidate, of the plurality of route candidates, generating a route document by stitching each data object of a respective road segment together, and wherein the ranking includes ranking each route document based at least in part on a matching of natural language words in each route document to user intent associated with the question or command.

5. The system of claim 4, wherein each route document includes one or more of: an overall length of a respective route candidate, elevation changes for the respective route candidate, a shape of the route candidate, a smoothness level of the respective route candidate, each type of road segment indicated within the respective route candidate, a type and name of locations along the respective candidate routes.

6. The system of claim 1, wherein the operations further comprise:
providing the natural language question or command and an indication of a map as input into a language model, and wherein the ranking of the plurality of route candidates is further based on the providing of the natural language question or command and the indication of the map as input into the language model.

7. The system of claim 1, wherein the indication of the response to the request to provide navigational directions or a route to the destination location includes at least one of: a graphical element superimposed over a map interface that highlights at least one route candidate, of the plurality of candidates, a language model-generated natural language summary of the user preference or at least one road associated with a respective route candidate, of the plurality of route candidates, or a tooltip user interface element that highlights a property of at least one respective route candidate, of the plurality of route candidates.

8. A computer-implemented method comprising:
receiving (602) a natural language question or command issued by a user, the natural language question or command corresponding to a request to provide at least one of navigational directions or a route to a destination location, and wherein the natural language question or command includes a user preference other than the destination location;
providing (604), as input, an indication of the natural language question or command input into a language model, wherein the language model detects an entity associated with the destination location and the user preference;
based at least in part on the language model detecting the entity associated with the destination location and the user preference, instructing (606) a routing component (118, 220) to rank a plurality of route candidates; and
based at least in part on the instructing the routing component (118, 220) to rank the plurality of route candidates, causing presentation (608), at a user device, of an indication of a response to the request to provide navigational directions or a route to the destination location;
the method further comprising:
extracting contextual data, and wherein the contextual data includes at least one of, information from one or more previous turns that are part of a same first conversation as the natural language question or command, one or more previous natural language questions or commands generated prior to the natural language question or command that are a part of a second conversation, a spatial constraint within the natural language question or command, a temporal constraint within the natural language question or command, or context from an output generated by the language model, wherein the ranking of the plurality of route candidates is further based on the contextual data;
generating an augmented query by augmenting the natural language question or command with at least a portion of the contextual data; and
providing the augmented query as input into the language model, and wherein the language model detects the entity associated with the destination location and the user preference based further on the providing of the augmented query as input into the language model.

9. The computer-implemented method of claim 8, the user preference includes a preference to navigate to the destination location via a first street or location or avoiding the first street or location.

10. The computer-implemented method of claim 8, wherein the request to provide at least one of the navigational directions or the route to the destination location includes a request to provide a route or navigational directions from a source location to the destination location using or avoiding a first street or location, and the operations further comprise:
computing a distance from the source location to the first street, and from the source location to the destination location, and wherein the ranking of the plurality of route candidates is further based on the computing of the distance.

11. The computer-implemented method of claim 8, further comprising:
tagging, with metadata, each data object representing a road segment of each route candidate, of the plurality of route candidates; and
for each route candidate, of the plurality of route candidates, generating a route document by stitching each data object of a respective road segment together, and wherein the ranking includes ranking each route document based at least in part on a matching of natural language words in each route document to user intent associated with the question or command;
optionally wherein each route document includes one or more of, an overall length of a respective route candidate, elevation changes for the respective route candidate, a shape of the route candidate, a smoothness level of the respective route candidate, each type of road segment indicated within the respective route candidate, a type and name of locations along the respective candidate routes.

12. The computer-implemented method of claim 8, wherein the ranking of the plurality of route candidates is further based on the providing an indication of a map as input into the language model.

13. The computer-implemented method of claim 8, wherein the indication of the response to the request to provide navigational directions or a route to the destination location includes at least one of: a graphical element superimposed over a map interface that highlights at least one route candidate, of the plurality of candidates, a natural language summary of the user preference or at least one road associated with a respective route candidate, of the plurality of route candidates, or a tooltip user interface element that highlights a property of at least one respective route candidate, of the plurality of route candidates.

14. The computer-implemented method of claim 8, wherein the extracting the user preference is based on at least one of: performing natural language processing of the natural language question or command, performing natural language processing of first text that is part of a current conversation as the natural language question or command, performing natural language processing of second text that is part of a conversation prior to the current conversation, or extracting the user preference from a data store that does not include the natural language question or command

15. One or more computer storage media (12) having computer-executable instructions embodied thereon that, when executed, by one or more processors (14), cause the one or more processors (14) to perform the operations of any of method claims 8 to 14.

## Patentansprüche

1. Ein System, das Folgendes beinhaltet:
mindestens einen Computerprozessor (14); und
ein oder mehrere Computerspeichermedien (12), die von einem Computer verwendbare Anweisungen speichern, die, wenn sie von dem mindestens einen Computerprozessor verwendet werden, den mindestens einen Computerprozessor veranlassen, Abläufe durchzuführen, die Folgendes beinhalten:
Empfangen (602) einer von einem Benutzer ausgegebenen Frage oder eines von einem Benutzer ausgegebenen Befehls in natürlicher Sprache, wobei die Frage oder der Befehl in natürlicher Sprache einer Anfrage entspricht, Navigationswegbeschreibungen oder eine Route zu einem Zielort bereitzustellen;
als Reaktion auf das Empfangen der von dem Benutzer ausgegebenen Frage oder des von dem Benutzer ausgegebenen Befehls in natürlicher Sprache, Extrahieren (604) einer Benutzerpräferenz des Benutzers;
basierend mindestens teilweise auf der Frage oder dem Befehl in natürlicher Sprache und der Benutzerpräferenz des Benutzers, Einstufen (606) einer Vielzahl von Routenkandidaten; und
basierend mindestens teilweise auf der Einstufung der Vielzahl von Routenkandidaten, Bewirken (608) der Darstellung, an einer Kartenschnittstelle einer Benutzervorrichtung, einer Angabe einer Antwort auf die Anfrage, Navigationswegbeschreibungen oder eine Route zu dem Zielort bereitzustellen;
wobei die Abläufe ferner Folgendes beinhalten:
Extrahieren kontextueller Daten, wobei die kontextuellen Daten mindestens eines von Folgendem umfassen: Informationen aus einem oder mehreren vorherigen Dialogzügen, die Teil derselben ersten Konversation wie die Frage oder der Befehl in natürlicher Sprache sind, eine oder mehrere vorherige Fragen oder Befehle in natürlicher Sprache, die vor der Frage oder dem Befehl in natürlicher Sprache generiert wurden und Teil einer zweiten Konversation sind, eine räumliche Einschränkung innerhalb der Frage oder des Befehls in natürlicher Sprache, eine zeitliche Einschränkung innerhalb der Frage oder des Befehls in natürlicher Sprache oder Kontext aus einer von einem Sprachmodell generierten Ausgabe,
wobei die Einstufung der Vielzahl von Routenkandidaten ferner auf den kontextuellen Daten basiert;
Generieren einer erweiterten Anfrage durch Erweitern der Frage oder des Befehls in natürlicher Sprache mit mindestens einem Teil der kontextuellen Daten; und
Bereitstellen der erweiterten Anfrage als Eingabe in ein Sprachmodell, wobei das Sprachmodell innerhalb der erweiterten Anfrage die Benutzerpräferenz erkennt.

2. System gemäß Anspruch 1, wobei die Benutzerpräferenz eine Präferenz umfasst, über eine erste Straße oder einen ersten Ort zu dem Zielort zu navigieren oder die erste Straße oder den ersten Ort zu umgehen.

3. System gemäß Anspruch 1, wobei eines oder mehrere von Folgendem bereitgestellt werden:
(i) das Extrahieren der Benutzerpräferenz basiert auf mindestens einem von Folgendem: Durchführen einer Verarbeitung natürlicher Sprache der Frage oder des Befehls in natürlicher Sprache, Durchführen einer Verarbeitung natürlicher Sprache eines ersten Textes, der zusammen mit der Frage oder dem Befehl in natürlicher Sprache Teil einer aktuellen Konversation ist, Durchführen einer Verarbeitung natürlicher Sprache eines zweiten Textes, der Teil einer der aktuellen Konversation vorausgehenden Konversation ist, oder Extrahieren der Benutzerpräferenz aus einem Datenspeicher, der die Frage oder den Befehl in natürlicher Sprache nicht umfasst;
(ii) die Anfrage, Navigationswegbeschreibungen oder eine Route zu dem Zielort bereitzustellen, umfasst eine Anfrage, eine Route oder Navigationswegbeschreibungen von einem Ausgangsort zu dem Zielort unter Verwendung oder unter Umgehung einer ersten Straße oder eines ersten Orts bereitzustellen, wobei die Abläufe ferner Folgendes beinhalten:
Berechnen einer Entfernung von dem Ausgangsort zu der ersten Straße und von dem Ausgangsort zu dem Zielort, wobei die Einstufung der Vielzahl von Routenkandidaten ferner auf dem Berechnen der Entfernung von dem Ausgangsort zu der ersten Straße und von dem Ausgangsort zu dem Zielort basiert.

4. System gemäß Anspruch 1, wobei die Abläufe ferner Folgendes beinhalten: Kennzeichnen jedes Datenobjekts, das ein Straßensegment eines jeweiligen Routenkandidaten aus der Vielzahl von Routenkandidaten darstellt, mit Metadaten; und für jeden Routenkandidaten aus der Vielzahl von Routenkandidaten, Generieren eines Routendokuments durch Zusammenfügen der Datenobjekte der jeweiligen Straßensegmente, wobei die Einstufung das Einstufen jedes Routendokuments basierend mindestens teilweise auf einer Übereinstimmung von Wörtern in natürlicher Sprache in jedem Routendokument mit einer der Frage oder dem Befehl zugeordneten Benutzerabsicht umfasst.

5. System gemäß Anspruch 4, wobei jedes Routendokument eines oder mehrere von Folgendem umfasst: eine Gesamtlänge eines jeweiligen Routenkandidaten, Höhenänderungen für den jeweiligen Routenkandidaten, eine Form des Routenkandidaten, einen Glattheitsgrad des jeweiligen Routenkandidaten, jede innerhalb des jeweiligen Routenkandidaten angegebene Art von Straßensegment sowie eine Art und einen Namen von Orten entlang der jeweiligen Kandidatenroute.

6. System gemäß Anspruch 1, wobei die Abläufe ferner Folgendes beinhalten: Bereitstellen der Frage oder des Befehls in natürlicher Sprache und einer Angabe einer Karte als Eingabe in ein Sprachmodell, wobei die Einstufung der Vielzahl von Routenkandidaten ferner auf dem Bereitstellen der Frage oder des Befehls in natürlicher Sprache und der Angabe der Karte als Eingabe in das Sprachmodell basiert.

7. System gemäß Anspruch 1, wobei die Angabe der Antwort auf die Anfrage, Navigationswegbeschreibungen oder eine Route zu dem Zielort bereitzustellen, mindestens eines von Folgendem umfasst: ein auf einer Kartenschnittstelle überlagertes grafisches Element, das mindestens einen Routenkandidaten aus der Vielzahl von Routenkandidaten hervorhebt, eine von einem Sprachmodell generierte Zusammenfassung in natürlicher Sprache der Benutzerpräferenz oder mindestens einer Straße, die einem jeweiligen Routenkandidaten aus der Vielzahl von Routenkandidaten zugeordnet ist, oder ein Tooltipp-Benutzerschnittstellenelement, das eine Eigenschaft mindestens eines jeweiligen Routenkandidaten aus der Vielzahl von Routenkandidaten hervorhebt.

8. Ein computerimplementiertes Verfahren, das Folgendes beinhaltet:
Empfangen (602) einer von einem Benutzer ausgegebenen Frage oder eines von einem Benutzer ausgegebenen Befehls in natürlicher Sprache, wobei die Frage oder der Befehl in natürlicher Sprache einer Anfrage entspricht,
Navigationswegbeschreibungen oder eine Route zu einem Zielort bereitzustellen, und wobei die Frage oder der Befehl in natürlicher Sprache eine andere Benutzerpräferenz als den Zielort umfasst;
Bereitstellen (604) einer Angabe der Frage oder des Befehls in natürlicher Sprache als Eingabe in ein Sprachmodell, wobei das Sprachmodell eine dem Zielort und der Benutzerpräferenz zugeordnete Entität erkennt;
basierend mindestens teilweise darauf, dass das Sprachmodell die dem Zielort und der Benutzerpräferenz zugeordnete Entität erkennt, Anweisen (606) einer Routing-Komponente (118, 220), eine Vielzahl von Routenkandidaten einzustufen; und
basierend mindestens teilweise auf dem Anweisen der Routing-Komponente (118, 220), die Vielzahl von Routenkandidaten einzustufen, Bewirken (608) der Darstellung einer Angabe einer Antwort auf die Anfrage, Navigationswegbeschreibungen oder eine Route zu dem Zielort bereitzustellen, an einer Benutzervorrichtung;
wobei das Verfahren ferner Folgendes beinhaltet:
Extrahieren kontextueller Daten, wobei die kontextuellen Daten mindestens eines von Folgendem umfassen: Informationen aus einem oder mehreren vorherigen Dialogzügen, die Teil derselben ersten Konversation wie die Frage oder der Befehl in natürlicher Sprache sind, eine oder mehrere vorherige Fragen oder Befehle in natürlicher Sprache, die vor der Frage oder dem Befehl in natürlicher Sprache generiert wurden und Teil einer zweiten Konversation sind, eine räumliche Einschränkung innerhalb der Frage oder des Befehls in natürlicher Sprache, eine zeitliche Einschränkung innerhalb der Frage oder des Befehls in natürlicher Sprache oder Kontext aus einer von dem Sprachmodell generierten Ausgabe, wobei die Einstufung der Vielzahl von Routenkandidaten ferner auf den kontextuellen Daten basiert;
Generieren einer erweiterten Anfrage durch Erweitern der Frage oder des Befehls in natürlicher Sprache mit mindestens einem Teil der kontextuellen Daten; und
Bereitstellen der erweiterten Anfrage als Eingabe in das Sprachmodell, wobei das Sprachmodell die dem Zielort und der Benutzerpräferenz zugeordnete Entität ferner basierend auf dem Bereitstellen der erweiterten Anfrage als Eingabe in das Sprachmodell erkennt.

9. Computerimplementiertes Verfahren gemäß Anspruch 8, die Benutzerpräferenz umfasst eine Präferenz, über eine erste Straße oder einen ersten Ort zu dem Zielort zu navigieren oder die erste Straße oder den ersten Ort zu umgehen.

10. Computerimplementiertes Verfahren gemäß Anspruch 8, wobei die Anfrage, Navigationswegbeschreibungen oder eine Route zu dem Zielort bereitzustellen, eine Anfrage umfasst, eine Route oder Navigationswegbeschreibungen von einem Ausgangsort zu dem Zielort unter Verwendung oder unter Umgehung einer ersten Straße oder eines ersten Orts bereitzustellen, wobei die Abläufe ferner Folgendes beinhalten:
Berechnen einer Entfernung von dem Ausgangsort zu der ersten Straße und von dem Ausgangsort zu dem Zielort, wobei die Einstufung der Vielzahl von Routenkandidaten ferner auf dem Berechnen der Entfernung basiert.

11. Computerimplementiertes Verfahren gemäß Anspruch 8, das ferner Folgendes beinhaltet:
Kennzeichnen jedes Datenobjekts, das ein Straßensegment eines jeweiligen Routenkandidaten aus der Vielzahl von Routenkandidaten darstellt, mit Metadaten; und
für jeden Routenkandidaten aus der Vielzahl von Routenkandidaten, Generieren eines Routendokuments durch Zusammenfügen der Datenobjekte der jeweiligen Straßensegmente, wobei die Einstufung das Einstufen jedes Routendokuments basierend mindestens teilweise auf einer Übereinstimmung von Wörtern in natürlicher Sprache in jedem Routendokument mit einer der Frage oder dem Befehl zugeordneten Benutzerabsicht umfasst;
wobei optional jedes Routendokument eines oder mehrere von Folgendem umfasst: eine Gesamtlänge eines jeweiligen Routenkandidaten, Höhenänderungen für den jeweiligen Routenkandidaten, eine Form des Routenkandidaten, einen Glattheitsgrad des jeweiligen Routenkandidaten, jede innerhalb des jeweiligen Routenkandidaten angegebene Art von Straßensegment sowie eine Art und einen Namen von Orten entlang der jeweiligen Kandidatenroute.

12. Computerimplementiertes Verfahren gemäß Anspruch 8, wobei die Einstufung der Vielzahl von Routenkandidaten ferner auf dem Bereitstellen einer Angabe einer Karte als Eingabe in das Sprachmodell basiert.

13. Computerimplementiertes Verfahren gemäß Anspruch 8, wobei die Angabe der Antwort auf die Anfrage, Navigationswegbeschreibungen oder eine Route zu dem Zielort bereitzustellen, mindestens eines von Folgendem umfasst: ein auf einer Kartenschnittstelle überlagertes grafisches Element, das mindestens einen Routenkandidaten aus der Vielzahl von Routenkandidaten hervorhebt, eine Zusammenfassung in natürlicher Sprache der Benutzerpräferenz oder mindestens einer Straße, die einem jeweiligen Routenkandidaten aus der Vielzahl von Routenkandidaten zugeordnet ist, oder ein Tooltipp-Benutzerschnittstellenelement, das eine Eigenschaft mindestens eines jeweiligen Routenkandidaten aus der Vielzahl von Routenkandidaten hervorhebt.

14. Computerimplementiertes Verfahren gemäß Anspruch 8, wobei das Extrahieren der Benutzerpräferenz auf mindestens einem von Folgendem basiert: Durchführen einer Verarbeitung natürlicher Sprache der Frage oder des Befehls in natürlicher Sprache, Durchführen einer Verarbeitung natürlicher Sprache eines ersten Textes, der zusammen mit der Frage oder dem Befehl in natürlicher Sprache Teil einer aktuellen Konversation ist, Durchführen einer Verarbeitung natürlicher Sprache eines zweiten Textes, der Teil einer der aktuellen Konversation vorausgehenden Konversation ist, oder Extrahieren der Benutzerpräferenz aus einem Datenspeicher, der die Frage oder den Befehl in natürlicher Sprache nicht umfasst.

15. Ein oder mehrere Computerspeichermedien (12), auf denen computerausführbare Anweisungen verkörpert sind, die, wenn sie von einem oder mehreren Prozessoren (14) ausgeführt werden, den einen oder die mehreren Prozessoren (14) veranlassen, die Abläufe gemäß einem der Verfahrensansprüche 8 bis 14 durchzuführen.

## Revendications

1. Un système comprenant :
au moins un processeur pour ordinateur (14) ; et
un ou plusieurs supports de stockage pour ordinateur (12) stockant des instructions utilisables par un ordinateur qui, lorsqu'elles sont utilisées par l'au moins un processeur pour ordinateur, amènent l'au moins un processeur pour ordinateur à réaliser des opérations comprenant :
le fait de recevoir (602) une commande ou question en langage naturel émise par un utilisateur, la commande ou question en langage naturel correspondant à une requête de fournir au moins un élément parmi des directions de navigation ou un itinéraire jusqu'à un lieu de destination ;
en réponse à la réception de la commande ou question en langage naturel émise par l'utilisateur, le fait d'extraire (604) une préférence utilisateur de l'utilisateur ;
sur la base au moins en partie de la commande ou question en langage naturel et de la préférence utilisateur de l'utilisateur, le fait de classer (606) une pluralité d'itinéraires candidats ; et
sur la base au moins en partie du classement de la pluralité d'itinéraires candidats, le fait de causer (608) la présentation, au niveau d'une interface cartographique d'un dispositif utilisateur, d'une indication d'une réponse à la requête de fournir des directions de navigation ou un itinéraire jusqu'au lieu de destination ;
dans lequel les opérations comprennent en outre :
le fait d'extraire des données contextuelles, et dans lequel les données contextuelles incluent au moins un élément parmi des informations provenant d'un ou de plusieurs tours précédents qui font partie d'une même première conversation que la commande ou question en langage naturel, une ou plusieurs commandes ou questions en langage naturel précédentes générées antérieurement à la commande ou question en langage naturel qui font partie d'une deuxième conversation, une contrainte spatiale au sein de la commande ou question en langage naturel, une contrainte temporelle au sein de la commande ou question en langage naturel, ou du contexte provenant d'une sortie générée par un modèle de langage,
dans lequel le classement de la pluralité d'itinéraires candidats est en outre basé sur les données contextuelles ;
le fait de générer une demande augmentée en augmentant la commande ou question en langage naturel avec au moins une portion des données contextuelles ; et
le fait de fournir la demande augmentée en tant qu'entrée dans un modèle de langage, et dans lequel le modèle de langage détecte, au sein de la demande augmentée, la préférence utilisateur.

2. Le système de la revendication 1, dans lequel la préférence utilisateur inclut une préférence pour naviguer jusqu'au lieu de destination via une première rue ou un premier lieu ou en évitant la première rue ou le premier lieu.

3. Le système de la revendication 1, dans lequel une ou plusieurs des dispositions suivantes est prévue :
(i) l'extraction de la préférence utilisateur est basée sur au moins une opération parmi : le fait de réaliser un traitement du langage naturel de la commande ou question en langage naturel, le fait de réaliser un traitement du langage naturel d'un premier texte qui fait partie d'une conversation actuelle en tant que commande ou question en langage naturel, le fait de réaliser un traitement du langage naturel d'un deuxième texte qui fait partie d'une conversation antérieure à la conversation actuelle, ou le fait d'extraire la préférence utilisateur d'une unité de stockage de données qui n'inclut pas la commande ou question en langage naturel ;
(ii) la requête de fournir au moins un élément parmi les directions de navigation ou l'itinéraire jusqu'au lieu de destination inclut une requête de fournir des directions de navigation d'un itinéraire d'un lieu de départ au lieu de destination en utilisant ou en évitant une première rue ou un premier lieu et les opérations comprennent en outre :
le fait de calculer une distance du lieu de départ à la première rue, et du lieu de départ au lieu de destination, et dans lequel le classement de la pluralité d'itinéraires candidats est basé en outre sur le calcul de la distance du lieu de départ à la première rue et du lieu de départ au lieu de destination.

4. Le système de la revendication 1, dans lequel les opérations comprennent en outre :
le fait d'étiqueter, avec des métadonnées, chaque objet de données représentant un segment de route de chaque itinéraire candidat, de la pluralité d'itinéraires candidats ; et
pour chaque itinéraire candidat, de la pluralité d'itinéraires candidats, le fait de générer un document d'itinéraire en assemblant chaque objet de données d'un segment de route respectif ensemble, et dans lequel le classement inclut le fait de classer chaque document d'itinéraire sur la base au moins en partie d'une concordance de mots en langage naturel dans chaque document d'itinéraire avec une intention d'utilisateur associée à la commande ou question.

5. Le système de la revendication 4, dans lequel chaque document d'itinéraire inclut un ou plusieurs éléments parmi : une longueur totale d'un itinéraire candidat respectif, des changements de dénivelé pour l'itinéraire candidat respectif, une forme de l'itinéraire candidat, un niveau de roulant de l'itinéraire candidat respectif, chaque type de segment de route indiqué au sein de l'itinéraire candidat respectif, un type et nom de lieux le long des itinéraires candidats respectifs.

6. Le système de la revendication 1, dans lequel les opérations comprennent en outre : le fait de fournir la commande ou question en langage naturel et une indication d'une carte en tant qu'entrée dans un modèle de langage, et dans lequel le classement de la pluralité d'itinéraires candidats est en outre basé sur la fourniture de la commande ou question en langage naturel et l'indication de la carte en tant qu'entrée dans le modèle de langage.

7. Le système de la revendication 1, dans lequel l'indication de la réponse à la requête de fournir des directions de navigation ou un itinéraire jusqu'au lieu de destination inclut au moins un élément parmi : un élément graphique superposé sur une interface cartographique qui met en lumière au moins un itinéraire candidat, de la pluralité de candidats, un résumé en langage naturel généré par un modèle de langage de la préférence utilisateur ou au moins une route associée à un itinéraire candidat respectif, de la pluralité d'itinéraires candidats, ou un élément d'interface utilisateur sous forme d'infobulle qui met en lumière une propriété d'au moins un itinéraire candidat respectif, de la pluralité d'itinéraires candidats.

8. Un procédé mis en œuvre par ordinateur comprenant :
le fait de recevoir (602) une commande ou question en langage naturel émise par un utilisateur, la commande ou question en langage naturel correspondant à une requête de fournir au moins un élément parmi des directions de navigation ou un itinéraire jusqu'à un lieu de destination, et dans lequel la commande ou question en langage naturel inclut une préférence utilisateur autre que le lieu de destination ;
le fait de fournir (604), en tant qu'entrée, une indication de la commande ou question en langage naturel entrée dans un modèle de langage, dans lequel le modèle de langage détecte une entité en association avec le lieu de destination et la préférence utilisateur ;
sur la base au moins en partie de la détection par le modèle de langage de l'entité en association avec le lieu de destination et la préférence utilisateur, le fait de donner l'instruction (606) à un composant de gestion des itinéraires (118, 220) de classer une pluralité d'itinéraires candidats ; et
sur la base au moins en partie de l'instruction donnée au composant de gestion des itinéraires (118, 220) de classer la pluralité d'itinéraires candidats, le fait de causer la présentation (608), au niveau d'un dispositif utilisateur, d'une indication d'une réponse à la requête de fournir des directions de navigation ou un itinéraire jusqu'au lieu de destination ;
le procédé comprenant en outre :
le fait d'extraire des données contextuelles, et dans lequel les données contextuelles incluent au moins un élément parmi des informations provenant d'un ou de plusieurs tours précédents qui font partie d'une même première conversation que la commande ou question en langage naturel, une ou plusieurs commandes ou questions en langage naturel précédentes générées antérieurement à la commande ou question en langage naturel qui font partie d'une deuxième conversation, une contrainte spatiale au sein de la commande ou question en langage naturel, une contrainte temporelle au sein de la commande ou question en langage naturel, ou du contexte provenant d'une sortie générée par le modèle de langage, dans lequel le classement de la pluralité d'itinéraires candidats est en outre basé sur les données contextuelles ;
le fait de générer une demande augmentée en augmentant la commande ou question en langage naturel avec au moins une portion des données contextuelles ; et
le fait de fournir la demande augmentée en tant qu'entrée dans le modèle de langage, et dans lequel le modèle de langage détecte l'entité en association avec le lieu de destination et la préférence utilisateur sur la base en outre de la fourniture de la demande augmentée en tant qu'entrée dans le modèle de langage.

9. Le procédé mis en œuvre par ordinateur de la revendication 8, la préférence utilisateur inclut une préférence pour naviguer jusqu'au lieu de destination via une première rue ou un premier lieu ou en évitant la première rue ou le premier lieu.

10. Le procédé mis en œuvre par ordinateur de la revendication 8, dans lequel la requête de fournir au moins un élément parmi les directions de navigation ou l'itinéraire jusqu'au lieu de destination inclut une requête de fournir un itinéraire ou des directions de navigation d'un lieu de départ au lieu de destination en utilisant ou en évitant une première rue ou un premier lieu, et les opérations comprennent en outre :
le fait de calculer une distance du lieu de départ à la première rue, et du lieu de départ au lieu de destination, et dans lequel le classement de la pluralité d'itinéraires candidats est basé en outre sur le calcul de la distance.

11. Le procédé mis en œuvre par ordinateur de la revendication 8, comprenant en outre :
le fait d'étiqueter, avec des métadonnées, chaque objet de données représentant un segment de route de chaque itinéraire candidat, de la pluralité d'itinéraires candidats ; et
pour chaque itinéraire candidat, de la pluralité d'itinéraires candidats, le fait de générer un document d'itinéraire en assemblant chaque objet de données d'un segment de route respectif ensemble, et dans lequel le classement inclut le fait de classer chaque document d'itinéraire sur la base au moins en partie d'une concordance de mots en langage naturel dans chaque document d'itinéraire avec une intention d'utilisateur associée à la commande ou question ;
facultativement dans lequel chaque document d'itinéraire inclut un ou plusieurs éléments parmi une longueur totale d'un itinéraire candidat respectif, des changements de dénivelé pour l'itinéraire candidat respectif, une forme de l'itinéraire candidat, un niveau de roulant de l'itinéraire candidat respectif, chaque type de segment de route indiqué au sein de l'itinéraire candidat respectif, un type et nom de lieux le long des itinéraires candidats respectifs.

12. Le procédé mis en œuvre par ordinateur de la revendication 8, dans lequel le classement de la pluralité d'itinéraires candidats est en outre basé sur la fourniture d'une indication d'une carte en tant qu'entrée dans le modèle de langage.

13. Le procédé mis en œuvre par ordinateur de la revendication 8, dans lequel l'indication de la réponse à la requête de fournir des directions de navigation ou un itinéraire jusqu'au lieu de destination inclut au moins un élément parmi : un élément graphique superposé sur une interface cartographique qui met en lumière au moins un itinéraire candidat, de la pluralité de candidats, un résumé en langage naturel de la préférence utilisateur ou au moins une route associée à un itinéraire candidat respectif, de la pluralité d'itinéraires candidats, ou un élément d'interface utilisateur sous forme d'infobulle qui met en lumière une propriété d'au moins un itinéraire candidat respectif, de la pluralité d'itinéraires candidats.

14. Le procédé mis en œuvre par ordinateur de la revendication 8, dans lequel l'extraction de la préférence utilisateur est basée sur au moins une opération parmi : le fait de réaliser un traitement du langage naturel de la commande ou question en langage naturel, le fait de réaliser un traitement du langage naturel d'un premier texte qui fait partie d'une conversation actuelle en tant que commande ou question en langage naturel, le fait de réaliser un traitement du langage naturel d'un deuxième texte qui fait partie d'une conversation antérieure à la conversation actuelle, ou le fait d'extraire la préférence utilisateur d'une unité de stockage de données qui n'inclut pas la commande ou question en langage naturel.

15. Un ou plusieurs supports de stockage pour ordinateur (12) sur lesquels sont incorporées des instructions exécutables par ordinateur qui, lorsqu'elles sont exécutées, par un ou plusieurs processeurs (14), amènent les un ou plusieurs processeurs (14) à réaliser les opérations de n'importe lesquelles des revendications de procédé 8 à 14.
